(19) **Europäisches Patentamt** **European Patent Office** **Office européen des brevets**

(11) **EP 4 474 773 B1**

(12) **EUROPEAN PATENT SPECIFICATION**

(45) Date of publication and mention
of the grant of the patent:
**03.12.2025 Bulletin 2025/49**

(21) Application number: **24178986.6**

(22) Date of filing: **30.05.2024**

(51) International Patent Classification (IPC):
**G01C 25/00** *(2006.01)*

(52) Cooperative Patent Classification (CPC):
**G01C 25/005**

(54) **AZIMUTH CALCULATION DEVICE AND AZIMUTH CALCULATION METHOD**

AZIMUTBERECHNUNGSVORRICHTUNG UND AZIMUTBERECHNUNGSVERFAHREN

DISPOSITIF ET PROCÉDÉ DE CALCUL D'AZIMUT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.06.2023 JP 2023090752**

(43) Date of publication of application:
**11.12.2024 Bulletin 2024/50**

(73) Proprietor: **Seiko Epson Corporation Tokyo 160-8801 (JP)**

(72) Inventors:
• **ITO, Fumiya**
**Suwa-shi, 392-8502 (JP)**
• **NAGASHIMA, Ryota**
**Suwa-shi, 392-8502 (JP)**

(74) Representative: **Lewis Silkin LLP Arbor 255 Blackfriars Road London SE1 9AX (GB)**

(56) References cited:
**JP-A- 2008 122 252      JP-A- 2009 192 495
KR-A- 20170 109 816**

• **FENG YIBO ET AL: "An Adaptive Compensation Algorithm for Temperature Drift of Micro-Electro-Mechanical Systems Gyroscopes Using a Strong Tracking Kalman Filter", SENSORS, vol. 15, no. 5, 13 May 2015 (2015-05-13), CH, pages 11222 - 11238, XP093216990, ISSN: 1424-8220, DOI: 10.3390/s150511222**

**Description**

BACKGROUND

1. Technical Field

The present disclosure relates to an azimuth calculation device and an azimuth calculation method.

2. Related Art

JP-A-2009-192495 describes a navigation device in which temperature characteristic data of the angular velocity bias is obtained based on the temperature detection value and the detection value of the angular velocity when the moving body is stopped and, when the temperature characteristic data of the angular velocity bias is valid, the angular velocity bias and the angular velocity are estimated in real time by performing GSP/INS integrated calculation using the angular velocity bias obtained from the temperature and the temperature characteristic of the angular velocity sensor as an initial value, thereby calculating the azimuth of the moving body.

However, in the control device described in JP-A-2009-192495, it is necessary to accumulate the relationship between the temperature detection value and the detection value of the angular velocity when the moving body is stopped to obtain the temperature characteristic data of the angular velocity bias. For this reason, when the amount of data accumulated is not sufficient because the number of times the moving body stops is small or in a case in which the temperature when the moving body travels is different from the temperature when the moving body is stopped, the estimation accuracy of the angular velocity bias may decrease.

"An Adaptive Compensation Algorithm for Temperature Drift of Micro-ElectroMechanical Systems Gyroscopes Using a Strong Tracking Kalman Filter" by Feng Yibo et al., Sensors, vol. 15, no. 5, 13 May 2015 discloses an adaptive algorithm for compensating the temperature bias of a MEMS gyroscope that can be used as a direction sensor in a vehicle. The algorithm uses a compass as a comparison for the angular velocity and derived azimuth indicated by the gyroscope. The algorithm also uses a temperature sensor to keep track of the environmental temperature. The outputs of the compass, gyroscope and the temperature sensor are fed into a temperature compensation model based on a linear relationship between the gyroscope drift, the temperature and the rate of change of temperature. The values of the parameters in the model are updated over time using the compass output and used to calculate a corrected gyroscope output.

SUMMARY

An azimuth calculation device according to the invention is defined in claim 1.
An azimuth calculation method according to the invention is defined in claim 5.

BRIEF DESCRIPTION OF THE DRAWINGS

FIG. 1 is a diagram illustrating a configuration example of an azimuth calculation device according to a first embodiment;
FIG. 2 is an explanatory diagram of an X-axis, a Y-axis, and a Z-axis;
FIG. 3 is a diagram illustrating an example of temperature characteristic information;
FIG. 4 is a graph illustrating an example of a temperature characteristic of angular velocity bias;
FIG. 5 is a flowchart illustrating an example of a procedure of an azimuth calculation method according to the present embodiment;
FIG. 6 is a flowchart illustrating an example of the specific procedure of an azimuth calculation method according to a first embodiment;
FIG. 7 is a flowchart illustrating an example of the specific procedure of an azimuth calculation method according to a second embodiment;
FIG. 8 is a diagram illustrating a configuration example of an azimuth calculation device according to a third embodiment;
FIG. 9 is a flowchart illustrating an example of the specific procedure of an azimuth calculation method according to the third embodiment; and
FIG. 10 is a flowchart illustrating another example of the specific procedure of the azimuth calculation method according to the third embodiment.

DESCRIPTION OF EMBODIMENTS

Hereinafter, preferred embodiments of the present disclosure will be described in detail with reference to the drawings.

1. First Embodiment

1-1. Azimuth Calculation Device

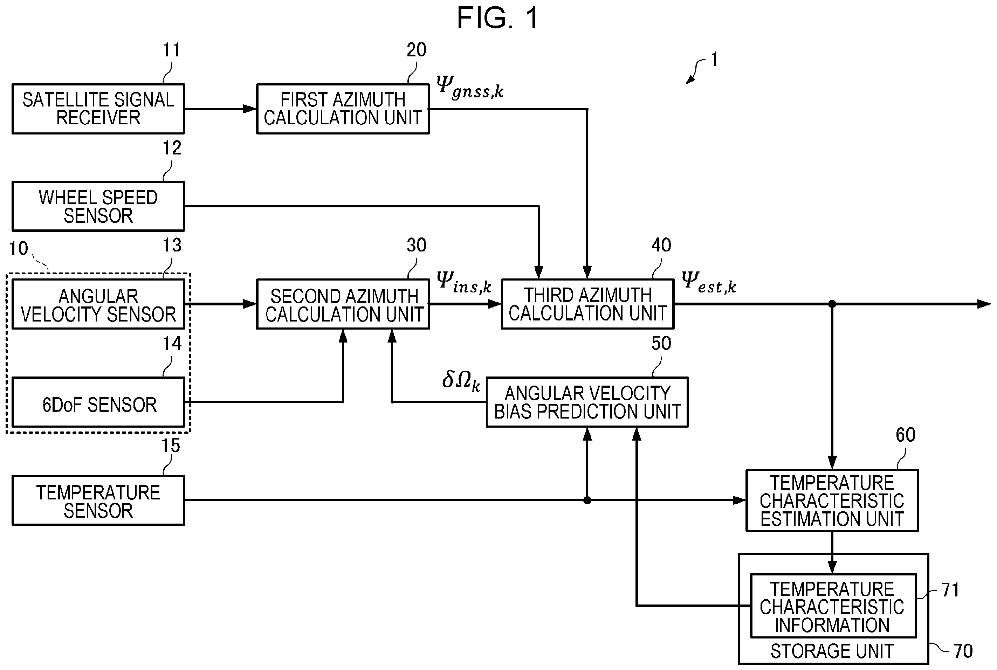

FIG. 1 is a diagram illustrating a configuration example of an azimuth calculation device according to a first embodiment. As illustrated in FIG. 1, an azimuth calculation device 1 according to the first embodiment includes a first azimuth calculation unit 20, a second azimuth calculation unit 30, a third azimuth calculation unit 40, an angular velocity bias prediction unit 50, a temperature characteristic estimation unit 60, and a storage unit 70. The azimuth calculation device 1 may include a satellite signal receiver 11, a wheel speed sensor 12, an angular velocity sensor 13, a 6DoF sensor 14, and a temperature sensor 15. Dof is an abbreviation for degrees of freedom. The azimuth calculation device 1 may have a configuration in which some of the components in FIG. 1 are omitted or changed or other components are added.

The azimuth calculation device 1 is mounted on a moving body. A local coordinate system, which is a three-axis coordinate system including an X-axis, a Y-axis, and a Z-axis, is defined in a moving body on which the azimuth calculation device 1 is mounted. The X-axis is an axis in which the traveling direction of the moving body is positive, the Y-axis is an axis in which a right direction perpendicular to the traveling direction of the moving body is positive, and the Z-axis is an axis in which a downward direction perpendicular to a plane on which the moving body travels is positive. In addition, a global coordinate system is defined in a space in which the moving body moves. The global coordinate system is a coordinate system fixed to the earth. In the following description, it is assumed that the azimuth calculation device 1 is mounted on a vehicle which is a moving body.

The satellite signal receiver 11 receives, via an antenna (not shown), a satellite signal transmitted from a satellite. The satellite forms a part of a satellite positioning system. The satellite positioning system may be a global navigation satellite system (GNSS). Examples of the GNSS include GPS (Global Positioning System), EGNOS (European Geostationary Navigation Overlay Service), QZSS (Quasi Zenith Satellite System), GLONASS (Global Navigation Satellite System), GALILEO, and BeiDou (BeiDou Navigation Satellite System).

The wheel speed sensor 12 detects a rotational speed of a wheel of a vehicle, which is a moving body, and outputs a wheel speed signal.

The angular velocity sensor 13 detects an angular velocity and outputs an angular velocity signal. Specifically, the angular velocity sensor 13 has one detection axis and is mounted on the moving body such that the detection axis extends along the Z-axis. The angular sensor 13 detects an angular velocity around the Z-axis and outputs a Z-axis angular velocity signal. For example, the angular velocity sensor 13 may be a crystal gyro sensor that has a sensor element (not shown) made of crystal and detects an angular velocity with high accuracy.

The 6DoF sensor 14 detects angular velocities around three axes perpendicular to each other and accelerations in the directions of the three axes, and outputs three-axis angular velocity signals and three-axis accelerations signals. Specifically, the 6DoF sensor 14 has three detection axes perpendicular to each other, and is mounted on the moving body such that the three detection axes extend along the X-axis, the Y-axis, and the Z-axis, respectively. The 6DoF sensor 14 detects an angular velocity around the X-axis, an angular velocity around the Y-axis, and an angular velocity around the Z-axis and outputs three-axis angular velocity signals, and detects an acceleration in the X-axis direction, an acceleration in the Y-axis direction, and an acceleration in the Z-axis direction and outputs three-axis acceleration signals. For example, the 6DoF sensor 14 may be a capacitive sensor obtained by processing a silicon substrate using a MEMS technique.

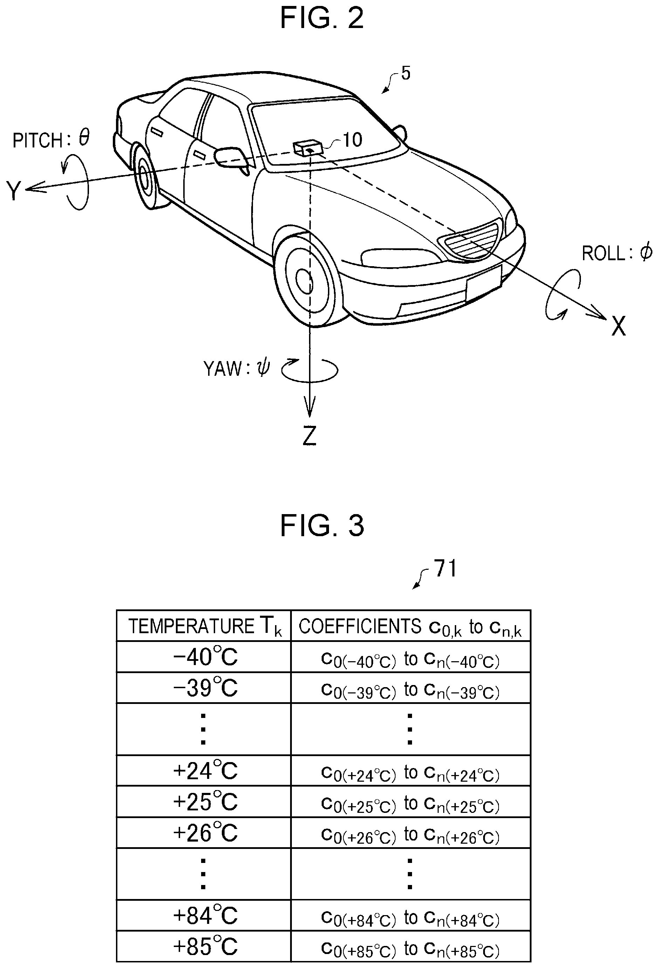

For example, the angular velocity sensor 13 and the 6DoF sensor 14 may be housed in one housing so that the detection axis of the angular velocity sensor 13 and any one of the three detection axes of the 6DoF sensor 14 are in the same direction, thereby forming a sensor module 10 that detects angular velocities around the three axes and accelerations in the directions of the three axes. In this case, for example, as illustrated in FIG. 2, the sensor module 10 is mounted on a vehicle 5, which is a moving body, such that the three axes extend along the X-axis, the Y-axis, and the Z-axis. The angular velocity sensor 13 detects an angular velocity around the Z-axis, and the 6DoF sensor 14 detects an angular velocity around the X-axis, an angular velocity around the Y-axis, an angular velocity around the Z-axis, an acceleration in the X-axis direction, an acceleration in the Y-axis direction, and an acceleration in the Z-axis direction. The sensor module 10 may output data including the angular velocity around the Z-axis detected by the angular velocity sensor 13 and the angular velocities around the three axes and the accelerations in the directions of the three axes detected by the 6DoF sensor 14. For example, when the angular velocity around the Z-axis detected by the angular velocity sensor 13 is more accurate than the angular velocity around the Z-axis detected by the 6DoF sensor 14, the sensor module 10 may output data including the angular velocity around the Z-axis detected by the angular velocity sensor 13 and the angular velocity around the X-axis, the angular velocity around the Y-axis, and the accelerations in the directions of the three axes detected by the 6DoF sensor 14.

Here, the angular velocity sensor 13 and the 6DoF sensor 14 may be separate bodies.

The temperature sensor 15 detects a temperature and outputs a temperature signal. For example, the temperature sensor 15 is disposed in the vicinity of the angular velocity sensor 13 and detects the temperature of the angular velocity sensor 13. Alternatively, the angular velocity sensor 13 and the temperature sensor 15 may be housed in one housing.

The first azimuth calculation unit 20 calculates, based on the satellite signal received by the satellite signal receiver 11, a first azimuth $\Psi_{gnss,k}$, which is the azimuth of the moving body in the global coordinate system at time k. The first azimuth calculation unit 20 calculates the first azimuth $\Psi_{gnss,k}$ at a predetermined period, for example, every one second. For example, the first azimuth calculation unit 20 may calculate the velocity vector of the moving body by using a phenomenon in which the frequency of the satellite signal shifts according to the relationship between the position of the satellite and the velocity of the moving body due to the Doppler effect, and may calculate the first azimuth $\Psi_{gnss,k}$ from the direction of the velocity vector. In addition, for example, the first azimuth calculation unit 20 may calculate based on the satellite signal, the position of the moving body in the global coordinate system, calculate a velocity vector by differentiating the position, and calculate the first azimuth $\Psi_{gnss,k}$ from the direction of the velocity vector. For example, antennas for receiving satellite signals may be provided at two different positions of the moving body, the satellite signal receiver 11 may calculate the positions of the two antennas based on the satellite signals received by the two antennas, and the first azimuth $\Psi_{gnss,k}$ may be calculated from the two calculated positions. Alternatively, two satellite signal receivers 11 may be mounted on the moving body, two positions may be calculated based on the respective satellite signals received by the two satellite signal receivers 11, and the first azimuth $\Psi_{gnss,k}$ may be calculated from the two calculated positions. The first azimuth calculation unit 20 may further calculate the position or the speed of the moving body in the global coordinate system by using known satellite navigation.

The second azimuth calculation unit 30 calculates, based on the angular velocity signal output from the angular velocity sensor 13, a second azimuth $\Psi_{ins,k}$, which is the azimuth of the moving body in the global coordinate system at time k. The second azimuth calculation unit 30 calculates the second azimuth $\Psi_{ins,k}$ at time k with the angular velocity bias corrected, based on the angular velocity bias $\delta\Omega_{k-1}$ at the last time k-1 predicted by the angular velocity bias prediction unit 50. The second azimuth calculation unit 30 calculates the second azimuth $\Psi_{ins,k}$ at a predetermined period, for example, every 0.01 seconds. Specifically, the second azimuth calculation unit 30 calculates the angular velocities of the roll angle $\phi$, the pitch angle $\theta$, and the yaw angle $\psi$ by using Equation (1) based on the angular velocity $\omega_z$ around the Z-axis at time k detected by the angular velocity sensor 13 and the angular velocity $\omega_x$ around the X-axis and the angular velocity $\omega_y$ around the Y-axis at time k detected by the 6DoF sensor 14. As illustrated in FIG. 2, the roll angle $\phi$ is a rotation angle with the X-axis in the traveling direction of the vehicle 5 as a rotation axis. In addition, the pitch angle $\theta$ is a rotation angle with the Y-axis in the right direction perpendicular to the traveling direction of the vehicle 5 as a rotation axis. In addition, the yaw angle $\psi$ is a rotation angle with the Z-axis in the downward direction perpendicular to the plane on which the vehicle 5 travels as a rotation axis. The yaw angle $\psi$ indicates the relative azimuth of the moving body, and the roll angle $\phi$ and the pitch angle $\theta$ indicate the posture of the moving body.

$$\begin{bmatrix} \dot{\phi} \\ \dot{\theta} \\ \dot{\psi} \end{bmatrix} = \begin{bmatrix} 1 & \sin\varphi\tan\theta & \cos\varphi\tan\theta \\ 0 & \cos\varphi & -\sin\varphi \\ 0 & \sin\varphi/\cos\theta & \cos\varphi/\cos\theta \end{bmatrix} \begin{bmatrix} \omega_x \\ \omega_y \\ \omega_z \end{bmatrix} \cdots (1)$$

With a third azimuth $\Psi_{est,k-1}$ at the last time k-1 calculated by the third azimuth calculation unit 40 as the initial azimuth, the second azimuth calculation unit 30 calculates the second azimuth $\Psi_{ins,k}$ at time k by adding a value, which is obtained by subtracting the angular velocity bias $\delta\Omega_{k-1}$ from the angular velocity of the yaw angle $\psi$ and integrating the subtraction result, to the third azimuth $\Psi_{est,k-1}$. In the traveling control of the vehicle 5, the yaw angle $\psi$ is most important among the roll angle $\phi$, the pitch angle $\theta$, and the yaw angle $\psi$. Therefore, in order to calculate the yaw angle $\psi$ with high accuracy, the azimuth calculation device 1 includes, in addition to the 6DoF sensor 14, the angular velocity sensor 13 that detects the angular velocity around the Z-axis with high accuracy.

The third azimuth calculation unit 40 calculates the third azimuth $\Psi_{est,k}$, which is the azimuth of the moving body in the global coordinate system at time k, based on the first azimuth $\Psi_{gnss,k}$ at time k calculated by the first azimuth calculation unit 20 and the second azimuth $\Psi_{ins,k}$ at time k calculated by the second azimuth calculation unit 30. The third azimuth calculation unit 40 calculates the third azimuth $\Psi_{est,k}$ at a predetermined period, for example, every one second by using known composite navigation in which the satellite navigation and the inertial navigation are combined. For example, the third azimuth calculation unit 40 may set the first azimuth $\Psi_{gnss,k}$ as the third azimuth $\Psi_{est,k}$ at the timing when the first azimuth $\Psi_{gnss,k}$ is calculated, and may set the second azimuth $\Psi_{ins,k}$ as the third azimuth $\Psi_{est,k}$ at the timing when the first azimuth $\Psi_{gnss,k}$ is not calculated. In addition, the third azimuth calculation unit 40 may calculate the third azimuth $\Psi_{est,k}$ by

using a Kalman filter. The third azimuth calculation unit 40 may further calculate the position of the moving body based on the speed, the posture, and the azimuth of the moving body. The speed of the moving body may be a speed calculated by the first azimuth calculation unit 20, or may be a speed calculated based on the wheel speed signal output from the wheel speed sensor 12. In addition, the posture of the moving body may be expressed by the roll angle $\Phi_{est,k}$ and the pitch angle $\Theta_{est,k}$, and the roll angle $\phi$ and the pitch angle $\theta$ may be calculated by the second azimuth calculation unit 30.

The storage unit 70 stores temperature characteristic information 71 of an angular velocity bias $\delta\Omega_k$. In the present embodiment, the angular velocity bias $\delta\Omega_k$ is the bias of the angular velocity of the second azimuth $\Psi_{ins,k}$ calculated by the second azimuth calculation unit 30, and is expressed by Equation (2). $\delta\Psi_{ins,k}$ in Equation (2) is an error of the second azimuth $\Psi_{ins,k}$, and is a difference between the second azimuth $\Psi_{ins,k}$ and the third azimuth $\Psi_{est,k}$ at time k calculated by the third azimuth calculation unit 40 as shown in Equation (3). $\Delta t$ in Equation (2) is a period at which the third azimuth calculation unit 40 calculates the third azimuth $\Psi_{est,k}$. For example, $\Delta t$ is 1 second.

$$\delta\Omega_k = \delta\dot{\Psi}_{ins,k} = \frac{\delta\Psi_{ins,k}}{\Delta t} \cdots (2)$$

$$\delta\Psi_{ins,k} = \Psi_{ins,k} - \Psi_{est,k} \cdots (3)$$

The angular velocity bias $\delta\Omega_k$ is approximated by an n-th degree polynomial having a temperature change $\Delta T_k$ at time k as a variable as in Equation (4). The temperature change $\Delta T_k$ is a difference between the temperature $T_k$ at time k and the temperature $T_k$ at time k-1 detected by the temperature sensor 15.

$$\delta\Omega_k = \sum_{i=0}^{n} c_{i,k}\Delta T_k{}^i = \sum_{i=0}^{n} c_{i,k}(T_k - T_{k-1})^i \cdots (4)$$

In the present embodiment, the temperature characteristic information 71 includes values of coefficients $c_{0,k}$ to $c_{n,k}$ of the polynomial (4) for each of a plurality of temperatures. FIG. 3 is a diagram illustrating an example of the temperature characteristic information 71. In the example of FIG. 3, the temperature characteristic information 71 includes values of coefficients $c_{0,k}$ to $c_{n,k}$ for each temperature in units of 1°C of -40°C to +85°C. The temperature characteristic information 71 does not necessarily include at least one of the values of the coefficients $c_{0,k}$ to $c_{n,k}$ for at least one temperature.

The temperature characteristic estimation unit 60 estimates the temperature characteristic of the angular velocity bias $\delta\Omega_k$ for the temperature $T_k$ detected by the temperature sensor 15, based on the second azimuth $\Psi_{ins,k}$ calculated by the second azimuth calculation unit 30 and the third azimuth $\Psi_{est,k}$ calculated by the third azimuth calculation unit 40, and updates the temperature characteristic information 71 stored in the storage unit 70 based on the estimated temperature characteristic. The temperature characteristic estimation unit 60 may estimate the values of the coefficients $c_{0,k}$ to $c_{n,k}$ of the polynomial (4) as the temperature characteristic of the angular velocity bias $\delta\Omega_k$ for the temperature $T_k$ and calculate the variances of the estimated coefficients $c_{0,k}$ to $c_{n,k}$. In a case in which the temperature characteristic information 71 includes the value of the coefficient $c_{i,k}$ of the polynomial (4) for the temperature $T_k$, the temperature characteristic estimation unit 60 may update the value of the coefficient $c_{i,k}$ included in the temperature characteristic information 71 to the estimated value of the coefficient $c_{i,k}$ when the variance of the coefficient $c_{i,k}$ is equal to or less than a predetermined threshold value, and may not update the value of the coefficient $c_{i,k}$ included in the temperature characteristic information 71 when the variance of the coefficient $c_{i,k}$ is larger than the predetermined threshold value. That is, the temperature characteristic estimation unit 60 may update the value of the coefficient $c_{i,k}$ for the temperature $T_k$, which is included in the temperature characteristic information 71, only when the estimation accuracy of the value of the coefficient $c_{i,k}$ for the temperature $T_k$ is equal to or greater than a predetermined value. In a case in which the temperature characteristic information 71 illustrated in FIG. 3 is stored in the storage unit 70, for example, when the temperature $T_k$ is 25°C and the variances of the coefficients $c_{0,k}$ to $c_{n,k}$ are all equal to or less than a predetermined threshold value, the temperature characteristic estimation unit 60 updates the values $c_{0(+25°C)}$ to $c_{n(+25°C)}$ of the coefficients $c_{0,k}$ to $c_{n,k}$ for 25°C included in the temperature characteristic information 71 to the estimated values of the coefficients $c_{0,k}$ to $c_{n,k}$.

When the temperature characteristic information 71 does not include the values of the coefficients $c_{0,k}$ to $c_{n,k}$ of the polynomial (4) for the temperature $T_k$, the temperature characteristic estimation unit 60 may update the values of the coefficients $c_{0,k}$ to $c_{n,k}$ included in the temperature characteristic information 71 to the estimated values of the coefficients $c_{0,k}$ to $c_{n,k}$ regardless of the values of the variances.

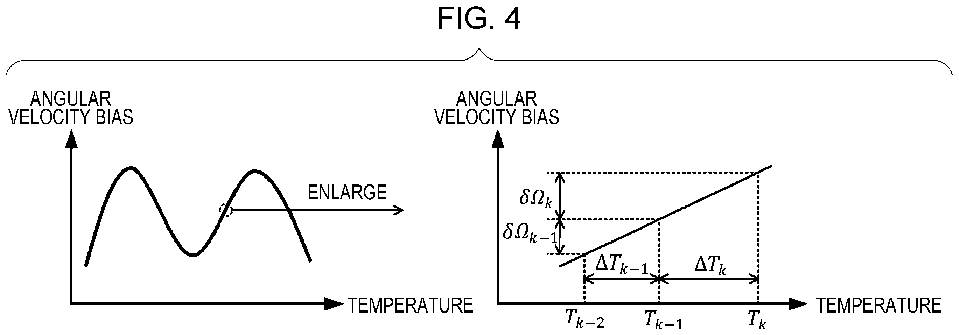

The temperature characteristic estimation unit 60 estimates the temperature characteristic of the angular velocity

bias $\delta\Omega_k$ at a predetermined period at which the third azimuth $\Psi_{est,k}$ is updated, for example, at a short period such as one second. Therefore, in each period in which the temperature characteristic estimation unit 60 estimates the temperature characteristic, the temperature change $\Delta T_k$ is small. As illustrated in FIG. 4, when the temperature change $\Delta T_k$ is small, the angular velocity bias $\delta\Omega_k$ can be regarded as changing linearly for the temperature change $\Delta T_k$. That is, the angular velocity bias $\delta\Omega_k$ is approximated by a linear polynomial of the temperature change $\Delta T_k$ as shown in Equation (5). Equation (5) corresponds to the polynomial (4) when n is 1.

$$\delta\Omega_k \cong c_{1,k}\Delta T_k + c_{0,k} = c_{1,k}(T_k - T_{k-1}) + c_{0,k} \cdots (5)$$

Therefore, the temperature characteristic estimation unit 60 may estimate the first-order coefficient $c_{1,k}$ and the zero-order coefficient $c_{0,k}$ of the polynomial in Equation (5) for the temperature $T_k$ according to the temperature signal output from the temperature sensor 15. In the present embodiment, the temperature characteristic estimation unit 60 estimates the first-order coefficient $c_{1,k}$ and the zero-order coefficient $c_{0,k}$ for the temperature $T_k$ by using an extended Kalman filter.

In the present embodiment, as shown in Equation (6), a state variable $x_k$ having the first-order coefficient $c_{1,k}$, the zero-order coefficient $c_{0,k}$, and the temperature $T_k$ as its elements is defined.

$$x_k = \begin{bmatrix} c_{1,k} \\ c_{0,k} \\ T_k \end{bmatrix} \cdots (6)$$

The state equation is defined by Equation (7). In Equation (7), $F_k$ is a state transition matrix, and is assumed to be $3\times3$ unit matrix as shown in Equation (8). In addition, in Equation (7), $v_k$ is drive noise, and has, as its elements, $\sigma_{v1}$, $\sigma_{v2}$, and $\sigma_{v3}$ that are set to appropriate values in advance as shown in Equation (9).

$$x_k = F_k x_{k-1} + v_k \cdots (7)$$

$$F_k = I = \begin{bmatrix} 1 & 0 & 0 \\ 0 & 1 & 0 \\ 0 & 0 & 1 \end{bmatrix} \cdots (8)$$

$$v_k = \begin{bmatrix} \sigma_{v1} \\ \sigma_{v2} \\ \sigma_{v3} \end{bmatrix} \cdots (9)$$

In the present embodiment, as shown in Equation (10), an observation variable $y_k$ having the angular velocity bias $\delta\Omega_k$, an angular velocity bias change $\delta\Omega_k - \delta\Omega_{k-1}$, and the temperature $T_k$ as its elements is defined.

$$y_k = \begin{bmatrix} \delta\Omega_k \\ \delta\Omega_k - \delta\Omega_{k-1} \\ T_k \end{bmatrix} \cdots (10)$$

The observation equation is defined by Equation (11). In Equation (11), $H_k$ is the observation Jacobian, and is expressed by Equation (12). In addition, in Equation (11), $w_k$ is observation noise, and has, as its elements, $\sigma_{w1}$, $\sigma_{w2}$, and $\sigma_{w3}$ that are set to appropriate values in advance as shown in Equation (13).

$$y_k = h(x_k, w_k) \cong H_k x_k + w_k \cdots (11)$$

$$H_k = \left.\frac{\partial \boldsymbol{h}}{\partial \boldsymbol{x}}\right|_{x=x_k} = \begin{bmatrix} \Delta T_k & 1 & c_{1,k} \\ \Delta T_k - \Delta T_{k-1} & 0 & c_{1,k} \\ 0 & 0 & 1 \end{bmatrix} \cdots (12)$$

$$\boldsymbol{w}_k = \begin{bmatrix} \sigma_{w1} \\ \sigma_{w2} \\ \sigma_{w3} \end{bmatrix} \cdots (13)$$

The temperature characteristic estimation unit 60 executes a prediction step, an observation step, and an update step of the extended Kalman filter, and estimates the temperature characteristic of the angular velocity bias $\delta\Omega_k$.

First, in the prediction step, the temperature characteristic estimation unit 60 predicts a state variable $\hat{x}_{k|k-1}$ at time k from a state variable $\hat{x}_{k-1|k-1}$ updated in the update step at time k-1 by using Equation (14) based on State Equation (7). That is, the state variable $\hat{x}_{k-1|k-1}$ is a posteriori estimation value at time k-1, and the state variable $\hat{x}_{k-1|k-1}$ is a priori estimation value at time k.

$$\hat{\boldsymbol{x}}_{k|k-1} = \boldsymbol{F}_k \hat{\boldsymbol{x}}_{k-1|k-1} = \hat{\boldsymbol{x}}_{k-1|k-1} \cdots (14)$$

In addition, in the prediction step, the temperature characteristic estimation unit 60 predicts, by using Equation (15), the covariance matrix $P_{k|k-1}$ of the state variable $\hat{x}_{k-1|k-1}$ at time k from the covariance matrix $P_{k-1|k-1}$ of the state variable $\hat{x}_{k-1|k-1}$ updated in the update step at time k-1. In Equation (15), $V_k$ is a covariance matrix of the drive noise $v_k$, and is calculated by Equation (16).

$$\boldsymbol{P}_{k|k-1} = \boldsymbol{F}_k \boldsymbol{P}_{k-1|k-1} \boldsymbol{F}_k{}^T + \boldsymbol{V}_k = \boldsymbol{P}_{k-1|k-1} + \boldsymbol{V}_k \cdots (15)$$

$$\boldsymbol{V}_k = \begin{bmatrix} \sigma_{v1}{}^2 & 0 & 0 \\ 0 & \sigma_{v2}{}^2 & 0 \\ 0 & 0 & \sigma_{v3}{}^2 \end{bmatrix} \cdots (16)$$

Subsequently, in the observation step, the temperature characteristic estimation unit 60 calculates a value to be observed from the state variables $\hat{x}_{k-1|k-1}$ predicted in the prediction step at time k by using Equation (17) based on Observation Equation (11). In Equation (17), the temperature change $\Delta T_k$ is, as in Equation (18), a difference between the temperature $T_{k|k-1}$ included in the state variable $\hat{x}_{k-1|k-1}$ and the temperature $T_{k-1|k-1}$ included in the state variable $\hat{x}_{k-1|k-1}$. In addition, the temperature change $\Delta T_{k-1}$ is, as in Equation (19), a difference between the temperature $T_{k-1|k-1}$ included in the state variable $\hat{x}_{k-1|k-1}$ and the temperature $T_{k-2|k-2}$ included in the state variable $\hat{x}_{k-2|k-2}$.

$$h(\hat{\boldsymbol{x}}_{k|k-1}, \boldsymbol{0}) \cong \boldsymbol{H}_k \hat{\boldsymbol{x}}_{k|k-1} = \begin{bmatrix} c_{1,k|k-1}\Delta T_k + c_{0,k|k-1} \\ c_{1,k|k-1}(\Delta T_k - \Delta T_{k-1}) \\ T_{k|k-1} \end{bmatrix} \cdots (17)$$

$$\Delta T_k = T_{k|k-1} - T_{k-1|k-1} \cdots (18)$$

$$\Delta T_{k-1} = T_{k-1|k-1} - T_{k-2|k-2} \cdots (19)$$

The temperature characteristic estimation unit 60 calculates, by using Equation (20), an observation residual $e_k$, which is a difference between the value of the observation variable $y_k$ at time k of actual observation and the value calculated by Equation (17).

7

$$e_k = y_k - h(\widehat{x}_{k|k-1}, 0) \cdots (20)$$

In addition, in the observation step, the temperature characteristic estimation unit 60 calculates, by using Equation (21), the covariance matrix $S_k$ of the observation residual $e_k$ from the covariance matrix $P_{k|k-1}$ of the state variable $\hat{x}_{k-1|k-1}$ predicted in the prediction step at time k. In Equation (21), $W_k$ is a covariance matrix of the observation noise $w_k$, and is calculated by Equation (22). In addition, $H_k$ is an observation Jacobian matrix, and is calculated by Equation (23).

$$S_k = W_k + H_k P_{k|k-1} H_k^{T} \cdots (21)$$

$$W_k = \begin{bmatrix} \sigma_{w1}{}^2 & 0 & 0 \\ 0 & \sigma_{w2}{}^2 & 0 \\ 0 & 0 & \sigma_{w3}{}^2 \end{bmatrix} \cdots (22)$$

$$H_k = \left.\frac{\partial h}{\partial x}\right|_{x=\widehat{x}_{k|k-1}} = \begin{bmatrix} \Delta T_k & 1 & c_{1,k|k-1} \\ \Delta T_k - \Delta T_{k-1} & 0 & c_{1,k|k-1} \\ 0 & 0 & 1 \end{bmatrix} \cdots (23)$$

Finally, in the update step, the temperature characteristic estimation unit 60 calculates, by using Equation (24), a Kalman gain $K_k$ from the covariance matrix $P_{k|k-1}$ of the state variable $\hat{x}_{k-1|k-1}$ predicted in the prediction step at time k and the covariance matrix $S_k$ of the observation residual $e_k$ calculated in the observation step at time k.

$$K_k = P_{k|k-1} H_k^{T} S_k^{-1} \cdots (24)$$

In the update step, the temperature characteristic estimation unit 60 updates, by using Equation (25), the state variable $\hat{x}_{k-1|k-1}$ predicted in the prediction step at time k to the state variable $\hat{x}_{k|k}$, based on the Kalman gain $K_k$ and the observation residual $e_k$ calculated in the observation step at time k. As described above, the state variable $\hat{x}_{k-1|k-1}$ is a priori estimation value at time k. In addition, the state variable $\hat{x}_{k|k}$ is a posteriori estimation value at time k.

$$\widehat{x}_{k|k} = \widehat{x}_{k|k-1} + K_k e_k \cdots (25)$$

Thus, the temperature characteristic estimation unit 60 estimates, by using the extended Kalman filter, the first-order coefficient $c_{1,k}$ and the zero-order coefficient $c_{0,k}$ included in the state variables $x_k$.

In the update step, the temperature characteristic estimation unit 60 updates, by using Equation (26), the covariance matrix $P_{k|k-1}$ of the state variables $\hat{x}_{k|k-1}$ predicted in the prediction step at time k to the covariance matrix $P_{k|k}$ of the state variables $\hat{x}_{k|k}$, based on the Kalman gains Kk.

$$P_{k|k} = \begin{pmatrix} p_{11} & p_{12} & p_{13} \\ p_{21} & p_{22} & p_{23} \\ p_{31} & p_{32} & p_{33} \end{pmatrix} = (I - K_k H_k) P_{k|k-1} \cdots (26)$$

In the covariance matrix $P_{k|k}$, $p_{11}$ is the variance of the first-order coefficient $c_{1,k}$ and $p_{22}$ is the variance of the zero-order coefficient $c_{0,k}$. In a case in which the temperature characteristic information 71 includes the value of the first-order coefficient $c_{1,k}$ for the temperature $T_k$, the temperature characteristic estimation unit 60 updates the value of the first-order coefficient $c_{1,k}$ included in the temperature characteristic information 71 to the estimated value of the first-order coefficient $c_{1,k}$ when the variance $p_{11}$ is equal to or less than a predetermined threshold value and does not update the value of the first-order coefficient $c_{1,k}$ included in the temperature characteristic information 71 when the variance $p_{11}$ is larger than the predetermined threshold value. When the temperature characteristic information 71 does not include the value of the first-order coefficient $c_{1,k}$ for the temperature $T_k$, the temperature characteristic estimation unit 60 updates the value of the first-order coefficient $c_{1,k}$ included in the temperature characteristic information 71 to the estimated value of the first-order coefficient $c_{1,k}$ regardless of the value of the variance $p_{11}$.

Similarly, in a case in which the temperature characteristic information 71 includes the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ when the variance $p_{22}$ is equal to or less than a predetermined threshold value and does not update the value of the zero-order coefficient $c_{0,k}$ included in the temperature characteristic information 71 when the variance $p_{22}$ is larger than the predetermined threshold value. When the temperature characteristic information 71 does not include the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ regardless of the value of the variance $p_{22}$.

The angular velocity bias prediction unit 50 predicts the angular velocity bias $\delta\Omega_k$ based on the temperature $T_k$ detected by the temperature sensor 15 and the temperature characteristic information 71 stored in the storage unit 70. For example, the angular velocity bias prediction unit 50 may predict the angular velocity bias $\delta\Omega_k$ by substituting the temperature $T_{k-1}$, the temperature $T_k$, and the coefficient $c_{0,k}$ to $c_{n,k}$ for the temperature $T_k$ included in the temperature characteristic information 71 into the polynomial (4).

The azimuth calculation device 1 configured as described above can estimate the angular velocity bias $\delta\Omega_k$ at a predetermined period, for example, every one second, regardless of whether the vehicle 5 as a moving body is stopped or traveling, and calculate the highly accurate third azimuth $\Psi_{est,k}$ with the angular velocity bias corrected.

A person who manufactures the angular velocity sensor 13 or a place where the angular velocity sensor 13 is manufactured may be the same as or different from a person who modularizes a part or entirety of the azimuth calculation device 1 including the angular velocity sensor 13 or a place where a part or entirety of the azimuth calculation device 1 including the angular velocity sensor 13 is modularized.


1-2. Azimuth Calculation Method

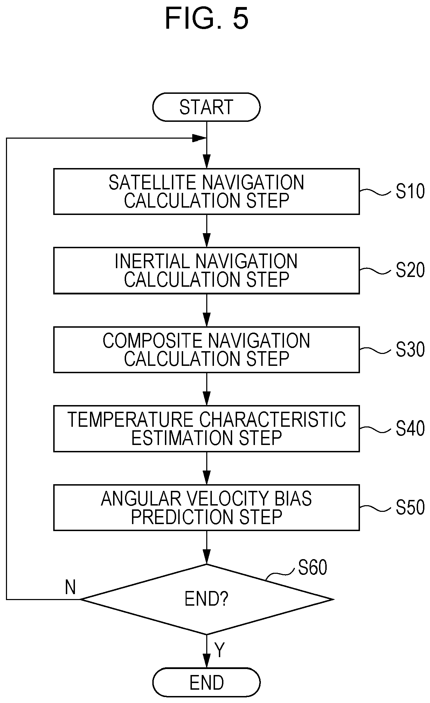

FIG. 5 is a flowchart illustrating an example of the procedure of an azimuth calculation method according to the present embodiment. As illustrated in FIG. 5, the azimuth calculation method according to the present embodiment includes a first azimuth calculation step S10, a second azimuth calculation step S20, a third azimuth calculation step S30, a temperature characteristic estimation step S40, and an angular velocity bias prediction step S50. In the present embodiment, the azimuth calculation device 1 performs processing of each step according to the procedure illustrated in FIG. 5. The azimuth calculation device 1 may perform the processing of each step by executing a program (not shown).

First, in the first azimuth calculation step S10, the first azimuth calculation unit 20 of the azimuth calculation device 1 calculates the first azimuth $\Psi_{gnss,k}$ based on the satellite signal received by the satellite signal receiver 11.

Subsequently, in the second azimuth calculation step S20, the second azimuth calculation unit 30 of the azimuth calculation device 1 calculates the second azimuth $\Psi_{ins,k}$ based on the angular velocity signal output from the angular velocity sensor 13 detecting the angular velocity. The second azimuth calculation unit 30 calculates the second azimuth $\Psi_{ins,k}$ with the angular velocity bias corrected, based on the angular velocity bias $\delta\Omega_{k-1}$ last time predicted in the angular velocity bias prediction step S50 to be described later.

Subsequently, in the third azimuth calculation step S30, the third azimuth calculation unit 40 of the azimuth calculation device 1 calculates the third azimuth $\Psi_{est,k}$ based on the first azimuth $\Psi_{gnss,k}$ calculated in the first azimuth calculation step S10 and the second azimuth $\Psi_{ins,k}$ calculated in the second azimuth calculation step S20.

Subsequently, in the temperature characteristic estimation step S40, the temperature characteristic estimation unit 60 of the azimuth calculation device 1 estimates, based on the second azimuth $\Psi_{ins,k}$ calculated in the second azimuth calculation step S20 and the third azimuth $\Psi_{est,k}$ calculated in the third azimuth calculation step S30, the temperature characteristic of the angular velocity biases $\delta\Omega_k$ for the temperature $T_k$ detected by the temperature sensors 15, and updates, based on the estimated temperature characteristic, the temperature characteristic information 71 of the angular velocity bias $\delta\Omega_k$ stored in the storage unit 70.

The temperature characteristic estimation unit 60 estimates the values of the coefficients $c_{0,k}$ to $c_{n,k}$ of the polynomial (4) as the temperature characteristic of the angular velocity bias $\delta\Omega_k$, calculates the variance of the estimated coefficients $c_{0,k}$ to $c_{n,k}$. In a case in which the temperature characteristic information 71 includes the value of the coefficient $c_{i,k}$ for the temperature $T_k$, the temperature characteristic estimation unit 60 may update the value of the coefficient $c_{i,k}$ included in the temperature characteristic information 71 to the estimated value of the coefficient $c_{i,k}$ when the variance of the coefficient $c_{i,k}$ is equal to or less than a predetermined threshold value and may not update the value of the coefficient $c_{i,k}$ included in the temperature characteristic information 71 when the variance of the coefficient $c_{i,k}$ is larger than the predetermined threshold value.

Subsequently, in the angular velocity bias prediction step S50, the angular velocity bias prediction unit 50 of the azimuth calculation device 1 predicts the angular velocity bias $\delta\Omega_k$ based on the temperature $T_k$ detected by the temperature sensor 15 and the temperature characteristic information 71 stored in the storage unit 70.

The azimuth calculation device 1 repeatedly performs steps S10 to S50 until the azimuth calculation process ends in step S60.

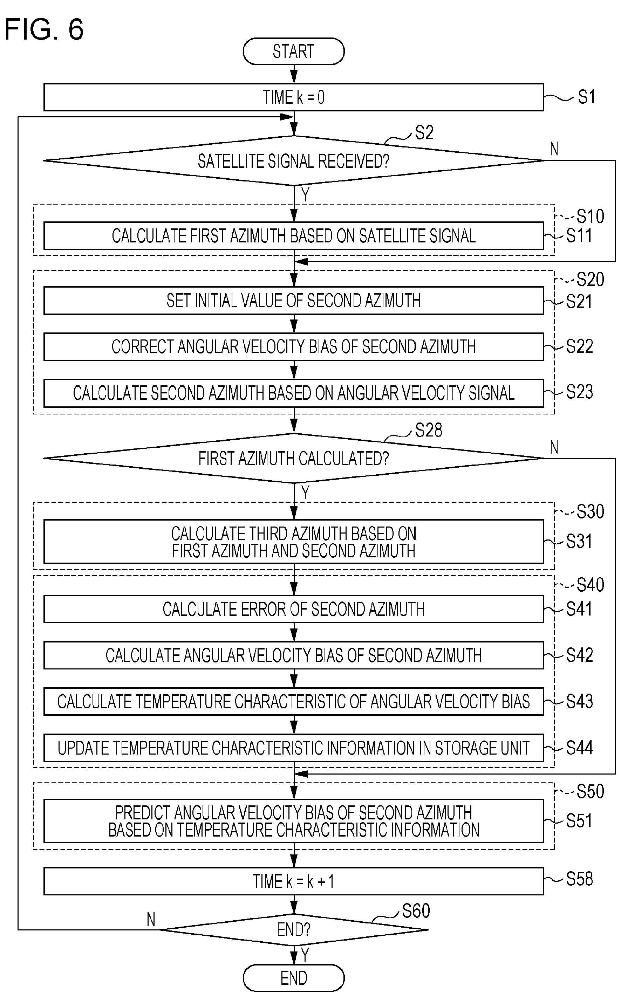

FIG. 6 is a flowchart illustrating an example of the specific procedure of an azimuth calculation method according to a first embodiment.

As illustrated in FIG. 6, first, in step S1, the azimuth calculation device 1 initializes time k to 0.

Subsequently, when the satellite signal receiver 11 can receive a satellite signal in step S2, the first azimuth calculation unit 20 of the azimuth calculation device 1 calculates the first azimuth $\Psi_{gnss,k}$ based on the satellite signal received by the satellite signal receiver 11 in step S11. When the satellite signal receiver 11 cannot receive a satellite signal in step S2, the first azimuth calculation unit 20 does not perform the processing of step S11. Step S11 corresponds to the first azimuth calculation step S10 in FIG. 5.

Subsequently, in step S21, the second azimuth calculation unit 30 of the azimuth calculation device 1 sets the initial value of the second azimuth $\Psi_{ins,k}$. Specifically, the third azimuth $\Psi_{est,k-1}$ last time calculated in step S31 described later is set as the initial value of the second azimuth $\Psi_{ins,k}$. When the third azimuth $\Psi_{est,k-1}$ is not calculated last time in step S31, the second azimuth calculation unit 30 sets the second azimuth $\Psi_{ins,k-1}$ last time calculated in step S23, which will be described later, as the initial value of the second azimuth $\Psi_{ins,k}$. When time k is 0, the second azimuth calculation unit 30 sets the second azimuth $\Psi_{ins,k}$ to an appropriate initial value.

Subsequently, in step S22, the second azimuth calculation unit 30 calculates, by using Equation (1) above, the angular velocity of the yaw angle $\psi$ based on the angular velocity $\omega_{z,k}$ around the Z-axis detected by the angular velocity sensor 13, and corrects the bias of the angular velocity of the yaw angle $\psi$ by subtracting the angular velocity bias $\delta\Omega_{k-1}$ last time predicted in step S51, which will be described later, from the angular velocity of the yaw angle $\psi$.

Subsequently, in step S23, a value obtained by integrating the angular velocity of the yaw angle $\psi$ whose bias has been corrected in step S21 is added to the initial value of the second azimuth $\Psi_{ins,k}$ set in step S22 to calculate the second azimuth $\Psi_{ins,k}$ with the angular velocity bias corrected.

Steps S21, S22, and S23 correspond to the second azimuth calculation step S20 in FIG. 5.

Subsequently, when it is determined in step S28 that the first azimuth $\Psi_{gnss,k}$ has been calculated in step S11, in step S31, the third azimuth calculation unit 40 of the azimuth calculation device 1 calculates the third azimuth $\Psi_{est,k}$ based on the first azimuth $\Psi_{gnss,k}$ calculated in step S11 and the second azimuth $\Psi_{ins,k}$ calculated in step S23. In step S30, when the first azimuth $\Psi_{gnss,k}$ is not calculated in step S11, the third azimuth calculation unit 40 does not perform the processing of step S31. Step S31 corresponds to the third azimuth calculation step S30 in FIG. 5.

Subsequently, in step S41, the temperature characteristic estimation unit 60 of the azimuth calculation device 1 calculates, by using Equation (3) above, an error $\delta\Psi_{ins,k}$ of the second azimuth $\Psi_{ins,k}$.

Subsequently, in step S42, the temperature characteristic estimation unit 60 calculates, by using Equation (2) above, the angular velocity bias $\delta\Omega_k$, which is the bias of the angular velocity of the second azimuth $\Psi_{ins,k}$.

Subsequently, in step S43, the temperature characteristic estimation unit 60 calculates the temperature characteristic of the angular velocity bias $\delta\Omega_k$. Specifically, the temperature characteristic estimation unit 60 calculates the observation variable $y_k$ shown in Equation (10) above based on the angular velocity bias $\delta\Omega_k$ calculated in step S42 and the temperature $T_k$ detected by the temperature sensor 15, and calculates, by using the extended Kalman filter described above, the state variable $x_k$ having, as its elements, the first-order coefficient $c_{1,k}$, the zero-order coefficient $c_{0,k}$, and the temperature $T_k$ of the above polynomial (5) shown in Equation (6) above.

Subsequently, in step S44, the temperature characteristic estimation unit 60 updates the temperature characteristic information 71 stored in the storage unit 70. Specifically, the temperature characteristic estimation unit 60 calculates the covariance matrix $P_{k|k}$ shown in Equation (26) above.

Subsequently, in a case in which the temperature characteristic information 71 includes the value of the first-order coefficient $c_{1,k}$ for the temperature $T_k$, the temperature characteristic estimation unit 60 updates the value of the coefficient $c_{1,k}$ included in the temperature characteristic information 71 to the estimated value of the coefficient $c_{1,k}$ when the variance $p_{11}$ is equal to or less than a predetermined threshold value and does not update the value of the coefficient $c_{1,k}$ included in the temperature characteristic information 71 when the variance $p_{11}$ is larger than the predetermined threshold value. When the temperature characteristic information 71 does not include the value of the first-order coefficient $c_{1,k}$ for the temperature $T_k$, the temperature characteristic estimation unit 60 updates the value of the first-order coefficient $c_{1,k}$ included in the temperature characteristic information 71 to the estimated value of the first-order coefficient $c_{1,k}$ regardless of the value of the variance $p_{11}$.

Similarly, in a case in which the temperature characteristic information 71 includes the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ when the variance $p_{22}$ is equal to or less than a predetermined threshold value and does not update the value of the zero-order coefficient $c_{0,k}$ included in the temperature characteristic information 71 when the variance $p_{22}$ is larger than the predetermined threshold value. When the temperature characteristic information 71 does not include the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ regardless of the value of the variance $p_{22}$.

Steps S41, S42, S43, and S44 correspond to the temperature characteristic estimation step S40 in FIG. 5.

Subsequently, in step S51, the angular velocity bias prediction unit 50 of the azimuth calculation device 1 predicts the angular velocity bias $\delta\Omega_k$ of the second azimuth $\Psi_{ins,k}$ based on the temperature characteristic information 71 stored in the storage unit 70. For example, the angular velocity bias prediction unit 50 may predict the angular velocity bias $\delta\Omega_k$ by substituting the temperature $T_{k-1}$, the temperature $T_k$, and the first-order coefficient $c_{1,k}$ and the zero-order coefficient $c_{0,k}$ for the temperature $T_k$ included in the temperature characteristic information 71 into the linear polynomial (5). Step S51 corresponds to the angular velocity bias prediction step S50 in FIG. 5.

The azimuth calculation device 1 increases time k by 1 in step S58, and repeatedly performs steps S2 to S58 until the azimuth calculation process ends in step S60.

In this manner, the azimuth calculation device 1 can estimate the angular velocity bias $\delta\Omega_k$ at a predetermined period, for example, every one second, regardless of whether the vehicle 5 as a moving body is stopped or traveling, and calculate the highly accurate third azimuth $\Psi_{est,k}$ with the angular velocity bias corrected.

1-3. Function and Effect

As described above, in the first embodiment, the first azimuth calculation unit 20 can calculate the first azimuth $\Psi_{gnss,k}$ based on the satellite signal regardless of whether the moving body on which the azimuth calculation device 1 is mounted is stopped or traveling, and the second azimuth calculation unit 30 can calculate the second azimuth $\Psi_{ins,k}$ based on the angular velocity signal output from the angular velocity sensor 13 even when a satellite signal cannot be received. Therefore, the third azimuth calculation unit 40 can seamlessly and periodically calculate the third azimuth $\Psi_{est,k}$ based on the first azimuth $\Psi_{gnss,k}$ and the second azimuth $\Psi_{ins,k}$. As a result, even when the moving body is traveling, the temperature characteristic estimation unit 60 can periodically estimate the temperature characteristic of the angular velocity bias $\delta\Omega_k$ of the second azimuth $\Psi_{ins,k}$ based on the second azimuth $\Psi_{ins,k}$ and the third azimuth $\Psi_{est,k}$ and can update the temperature characteristic information 71 stored in the storage unit 70. Therefore, the second azimuth calculation unit 30 can calculate the second azimuth $\Psi_{ins,k}$ with the angular velocity bias corrected, based on the angular velocity bias $\delta\Omega_{k-1}$ last time predicted by the angular velocity bias prediction unit 50 based on the temperature characteristic information 71. In addition, since the temperature characteristic estimation unit 60 estimates the temperature characteristic of the angular velocity bias $\delta\Omega_k$ for the temperature $T_k$ detected by the temperature sensor 15, it is possible to accurately estimate the temperature characteristic of the angular velocity bias $\delta\Omega_k$ for each narrow temperature range. Therefore, according to the first embodiment, the azimuth calculation device 1 can calculate the azimuth with the angular velocity bias corrected with high accuracy regardless of whether the moving body is stopped or traveling.

In addition, in the first embodiment, the angular velocity bias $\delta\Omega_k$ is not approximated by a polynomial having the temperature $T_k$ as a variable, but is approximated by the polynomial (4) having the temperature change $\Delta T_k$ as a variable. Therefore, the temperature characteristic estimation unit 60 can accurately estimate the temperature characteristic of the angular velocity bias $\delta\Omega_k$ for each narrow temperature range. In a narrow temperature range, the angular velocity bias $\delta\Omega_k$ is accurately approximated by the linear polynomial (5) having the temperature change $\Delta T_k$ as a variable. Therefore, it is possible to reduce the calculation load for estimation while maintaining the estimation accuracy of the temperature characteristic of the angular velocity bias $\delta\Omega_k$ by the temperature characteristic estimation unit 60.

In addition, in the first embodiment, since the temperature characteristic estimation unit 60 updates the values of the coefficients $c_{0,k}$ to $c_{n,k}$ included in the temperature characteristic information 71 only when the estimation accuracy of the coefficients $c_{0,k}$ to $c_{n,k}$ of the polynomial (4) approximating the angular velocity bias $\delta\Omega_k$ is equal to or greater than a predetermined value, the angular velocity bias prediction unit 50 can accurately predict the angular velocity bias $\delta\Omega_k$ based on the temperature characteristic information 71. Therefore, according to the first embodiment, the azimuth calculation device 1 can calculate the azimuth with the angular velocity bias corrected with high accuracy.

2. Second Embodiment

Hereinafter, in a second embodiment, components similar to those in the first embodiment are denoted by the same reference numerals, descriptions overlapping those in the first embodiment will be omitted or simplified, and contents different from those in the first embodiment will be mainly described.

In the second embodiment, the angular velocity bias $\delta\Omega_k$ is different from that in the first embodiment. That is, in the first embodiment, the angular velocity bias $\delta\Omega_k$ is the bias of the angular velocity of the second azimuth $\Psi_{ins,k}$ calculated by the second azimuth calculation unit 30. However, in the second embodiment, the angular velocity bias $\delta\Omega_k$ is the bias of the angular velocity $\omega_{z,k}$ around the Z-axis detected by the angular velocity sensor 13. Since the Z-axis corresponds to the yaw axis, the angular velocity bias $\delta\Omega_k$ is, in other words, the bias of the angular velocity $\omega_{z,k}$ around the yaw axis.

Since a configuration example of an azimuth calculation device 1 according to the second embodiment is the same as that in FIG. 1, illustration thereof will be omitted. However, in the azimuth calculation device 1 according to the second embodiment, processes performed by the second azimuth calculation unit 30, the angular velocity bias prediction unit 50, and the temperature characteristic estimation unit 60 are different from those in the first embodiment.

The second azimuth calculation unit 30 calculates a second azimuth $\Psi_{ins,k}$, which is the azimuth of the moving body in the global coordinate system at time k, based on the angular velocity signal output from the angular velocity sensor 13. The second azimuth calculation unit 30 calculates the second azimuth $\Psi_{ins,k}$ at time k with the angular velocity bias corrected, based on the angular velocity bias $\delta\Omega_{k-1}$ at the last time k-1 predicted by the angular velocity bias prediction unit 50. Specifically, the second azimuth calculation unit 30 calculates the angular velocity around the Z-axis with the angular velocity bias corrected by subtracting the angular velocity bias $\delta\Omega_{k-1}$ from the angular velocity $\omega_{z,k}$ around the Z-axis detected by the angular velocity sensor 13. With the third azimuth $\Psi_{est,k-1}$ at the last time k-1 calculated by the third azimuth calculation unit 40 as the initial azimuth, the second azimuth calculation unit 30 calculates the second azimuth $\Psi_{ins,k}$ at time k by adding, to the third azimuth $\Psi_{est,k-1}$, a value, which is obtained by integrating the angular velocity of the yaw angle $\psi$ obtained by substituting the angular velocity around the Z-axis into Equation (1).

The temperature characteristic estimation unit 60 estimates the temperature characteristic of the angular velocity bias $\delta\Omega_k$ for the temperature $T_k$ detected by the temperature sensor 15, based on the second azimuth $\Psi_{ins,k}$ calculated by the second azimuth calculation unit 30 and the third azimuth $\Psi_{est,k}$ calculated by the third azimuth calculation unit 40, and updates, based on the estimated temperature characteristic, the temperature characteristic information 71 stored in the storage unit 70.

In the present embodiment, the temperature characteristic estimation unit 60 calculates, by using Equation (27), the angular velocity bias $\delta\Omega_k$, which is an element of the observation variable $y_k$ shown in Equation (10) above.

$$\delta\Omega_k = \delta\omega_{z,k} = \omega_{z,k} - \omega_{z,k}^{est} \cdots (27)$$

The temperature characteristic estimation unit 60 calculates, by Equation (28), the angular velocity $\omega_{z,k}^{est}$ included in Equation (27), using the third azimuth $\Psi_{est,k}$, the roll angle $\Phi_{est,k}$, and the pitch angle $\Theta_{est,k}$ calculated by the third azimuth calculation unit 40. In Equation (29), $\Delta\Theta_{est,k}$ and $\Delta\Psi_{est,k}$ are expressed by Equation (29) and Equation (30), respectively.

$$\omega_{z,k}^{est} = \frac{1}{\Delta t}\left(-\Delta\Theta_{est,k}\sin\Phi_{est,k-1} + \Delta\Psi_{est,k}\cos\Phi_{est,k-1}\cos\Theta_{est,k-1}\right)\cdots(28)$$

$$\Delta\Theta_{est,k} = \Theta_{est,k} - \Theta_{est,k-1}\cdots(29)$$

$$\Delta\Psi_{est,k} = \Psi_{est,k} - \Psi_{est,k-1}\cdots(30)$$

The temperature characteristic estimation unit 60 estimates the first-order coefficient $c_{1,k}$ and the zero-order coefficient $c_{0,k}$ of the linear polynomial (5) for the temperature $T_k$ by using the extended Kalman filter similar to that in the first embodiment.

The angular velocity bias prediction unit 50 predicts the angular velocity bias $\delta\Omega_k$ based on the temperature $T_k$ detected by the temperature sensor 15 and the temperature characteristic information 71 stored in the storage unit 70. For example, the angular velocity bias prediction unit 50 may predict the angular velocity bias $\delta\Omega_k$ by substituting the temperature $T_{k-1}$, the temperature $T_k$, and the coefficient $c_{0,k}$ to $c_{n,k}$ for the temperature $T_k$ included in the temperature characteristic information 71 into the above polynomial (4).

The other configurations and functions of the azimuth calculation device 1 according to the second embodiment are the same as those in the first embodiment, and accordingly, description thereof will be omitted.

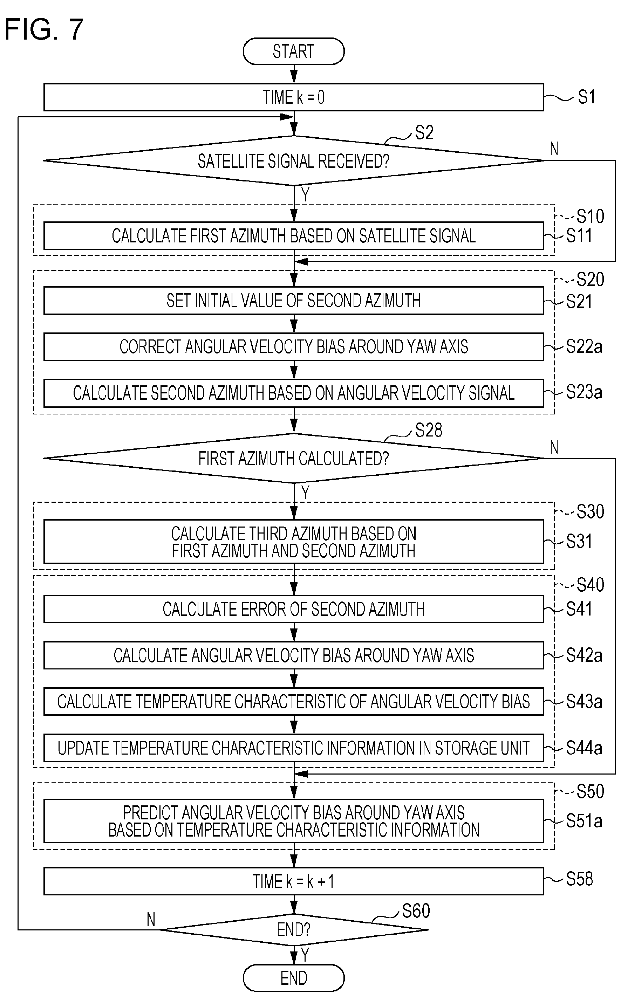

A flowchart illustrating an example of the procedure of an azimuth calculation method according to the second embodiment is the same as FIG. 5, and accordingly, illustration and description thereof will be omitted. However, in the second embodiment, specific procedures of the second azimuth calculation step S20, the temperature characteristic estimation step S40, and the angular velocity bias prediction step S50 in FIG. 5 are different from those in the first embodiment. FIG. 7 is a flowchart illustrating an example of the specific procedure of an azimuth calculation method according to a second embodiment. In FIG. 7, the same steps as those in FIG. 6 are denoted by the same reference numerals.

As illustrated in FIG. 7, first, in step S1, the azimuth calculation device 1 initializes time k to 0.

Subsequently, when the satellite signal receiver 11 can receive a satellite signal in step S2, the first azimuth calculation unit 20 of the azimuth calculation device 1 calculates, in step S11, the first azimuth $\Psi_{gnss,k}$ based on the satellite signal received by the satellite signal receiver 11. When the satellite signal receiver 11 cannot receive a satellite signal in step S2, the first azimuth calculation unit 20 does not perform the processing of step S11. Step S11 corresponds to the first azimuth calculation step S10 in FIG. 5.

Subsequently, in step S21, the second azimuth calculation unit 30 of the azimuth calculation device 1 sets the initial value of the second azimuth $\Psi_{ins,k}$. Specifically, the third azimuth $\Psi_{est,k-1}$ last time calculated in step S31 described later is set as the initial value of the second azimuth $\Psi_{ins,k}$. When the third azimuth $\Psi_{est,k-1}$ is not calculated last time in step S31, the second azimuth calculation unit 30 sets the second azimuth $\Psi_{ins,k-1}$ last time calculated in step S23a, which will be described later, as the initial value of the second azimuth $\Psi_{ins,k}$. When time k is 0, the second azimuth calculation unit 30 sets the second azimuth $\Psi_{ins,k}$ to an appropriate initial value.

Subsequently, in step S22a, the second azimuth calculation unit 30 corrects the angular velocity bias around the yaw axis by subtracting the angular velocity bias $\delta\Omega_{k-1}$ last time predicted in step S51a, which will be described later, from the angular velocity $\omega_{z,k}$ around the Z-axis detected by the angular velocity sensor 13.

Subsequently, in step S23a, the second azimuth calculation unit 30 adds, to the initial value of the second azimuth $\Psi_{ins,k}$ set in step S21, a value obtained by integrating the angular velocity of the yaw angle $\psi$ obtained by substituting the angular velocity around the yaw axis whose bias has been corrected in step S22a into Equation (1) above to calculate the second azimuth $\Psi_{ins,k}$.

Steps S21, S22a, and S23a correspond to the second azimuth calculation step S20 in FIG. 5.

Subsequently, when it is determined in step S28 that the first azimuth $\Psi_{gnss,k}$ has been calculated in step S11, the third azimuth calculation unit 40 of the azimuth calculation device 1 calculates, in step S31, the third azimuth $\Psi_{est,k}$ based on the first azimuth $\Psi_{gnss,k}$ calculated in step S11 and the second azimuth $\Psi_{ins,k}$ calculated in step S23a. In step S30, when the first azimuth $\Psi_{gnss,k}$ is not calculated in step S11, the third azimuth calculation unit 40 does not perform the processing of step S31. In step S31, the third azimuth calculation unit 40 also calculates the roll angle $\Phi_{est,k}$ and the pitch angle $\Theta_{est,k}$. Step S31 corresponds to the third azimuth calculation step S30 in FIG. 5.

Subsequently, in step S41, the temperature characteristic estimation unit 60 of the azimuth calculation device 1 calculates an error $\delta\Psi_{ins,k}$ of the second azimuth $\Psi_{ins,k}$ by using Equation (3) above.

Subsequently, in step S42a, the temperature characteristic estimation unit 60 calculates the angular velocity bias $\delta\Omega_k$, which is the bias of the angular velocity $\omega_{z,k}$ around the yaw axis, by using Equation (27) above.

Subsequently, in step S43a, the temperature characteristic estimation unit 60 calculates the temperature characteristic of the angular velocity bias $\delta\Omega_k$. Specifically, the temperature characteristic estimation unit 60 calculates the observation variable $y_k$ shown in Equation (10) above based on the angular velocity bias $\delta\Omega_k$ calculated in step S42a and the temperature $T_k$ detected by the temperature sensor 15, and calculates the state variable $x_k$ having, as its elements, the first-order coefficient $c_{1,k}$, the zero-order coefficient $c_{0,k}$, and the temperature $T_k$ of the above polynomial (5) shown in Equation (6) above by using the extended Kalman filter described above.

Subsequently, in step S44a, the temperature characteristic estimation unit 60 updates the temperature characteristic information 71 stored in the storage unit 70. Specifically, the temperature characteristic estimation unit 60 calculates the covariance matrix $P_{k|k}$ shown in Equation (26) above.

In a case in which the temperature characteristic information 71 includes the value of the first-order coefficient $c_{1,k}$ for the temperature $T_k$, the temperature characteristic estimation unit 60 updates the value of the coefficient $c_{1,k}$ included in the temperature characteristic information 71 to the estimated value of the coefficient $c_{1,k}$ when the variance $p_{11}$ is equal to or less than a predetermined threshold value and does not update the value of the coefficient $c_{1,k}$ included in the temperature characteristic information 71 when the variance $p_{11}$ is larger than the predetermined threshold value. When the temperature characteristic information 71 does not include the value of the first-order coefficient $c_{1,k}$ for the temperature $T_k$, the temperature characteristic estimation unit 60 updates the value of the first-order coefficient $c_{1,k}$ included in the temperature characteristic information 71 to the estimated value of the first-order coefficient $c_{1,k}$ regardless of the value of the variance $p_{11}$.

Similarly, in a case in which the temperature characteristic information 71 includes the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ when the variance $p_{22}$ is equal to or less than a predetermined threshold value and does not update the value of the zero-order coefficient $c_{0,k}$ included in the temperature characteristic information 71 when the variance $p_{22}$ is larger than the predetermined threshold value. When the temperature characteristic information 71 does not include the value of the zero-order coefficient $c_{0,k}$ for the temperature $T_k$, the temperature characteristic estimation unit 60 updates the value of the zero-order coefficient $c_{0,k}$ included in the temperature characteristic information 71 to the estimated value of the zero-order coefficient $c_{0,k}$ regardless of the value of the variance $p_{22}$.

Steps S41, S42a, S43a, and S44a correspond to the temperature characteristic estimation step S40 in FIG. 5.

Subsequently, in step S51a, the angular velocity bias prediction unit 50 of the azimuth calculation device 1 predicts the angular velocity bias $\delta\Omega_k$ around the yaw axis based on the temperature characteristic information 71 stored in the storage unit 70. For example, the angular velocity bias prediction unit 50 may predict the angular velocity bias $\delta\Omega_k$ by

substituting the temperature $T_{k-1}$, the temperature $T_k$, and the first-order coefficient $c_{1,k}$ and the zero-order coefficient $c_{0,k}$ for the temperature $T_k$ included in the temperature characteristic information 71 into the linear polynomial (5). Step S51a corresponds to the angular velocity bias prediction step S50 in FIG. 5.

The azimuth calculation device 1 increases time k by 1 in step S58, and repeatedly performs steps S2 to S58 until the azimuth calculation process ends in step S60.

As described above, in the second embodiment, even when the moving body is traveling, the temperature characteristic estimation unit 60 can periodically estimate, based on the second azimuth $\Psi_{ins,k}$ and the third azimuth $\Psi_{est,k}$, the temperature characteristic of the angular velocity bias $\delta\Omega_k$ of the angular velocity $\omega_{z,k}$ around the yaw axis detected by the angular velocity sensor 13 and can update the temperature characteristic information 71 stored in the storage unit 70. Therefore, the second azimuth calculation unit 30 can calculate the second azimuth $\Psi_{ins,k}$ with the angular velocity bias corrected, based on the angular velocity bias $\delta\Omega_{k-1}$ last time predicted by the angular velocity bias prediction unit 50 based on the temperature characteristic information 71. Therefore, according to the second embodiment, the azimuth calculation device 1 can calculate the azimuth with the angular velocity bias corrected with high accuracy regardless of whether the moving body is stopped or traveling. In addition, according to the second embodiment, the same effects as those in the first embodiment can be obtained.

3. Third Embodiment

Hereinafter, in a third embodiment, components similar to those in the first embodiment or the second embodiment are denoted by the same reference numerals, descriptions overlapping those in the first embodiment or the second embodiment will be omitted or simplified, and contents different from those in the first and second embodiments will be mainly described.

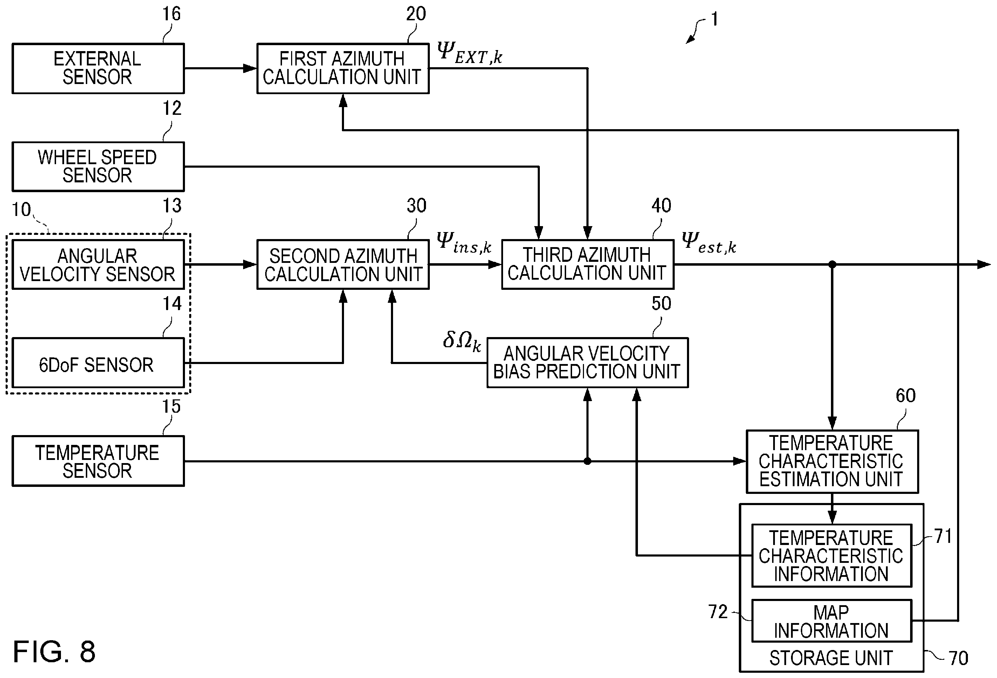

FIG. 8 is a diagram illustrating a configuration example of an azimuth calculation device 1 according to the third embodiment. In FIG. 8, the same components as those in FIG. 1 are denoted by the same reference numerals. As illustrated in FIG. 8, the azimuth calculation device 1 according to the third embodiment includes, similarly to the first embodiment, a first azimuth calculation unit 20, a second azimuth calculation unit 30, a third azimuth calculation unit 40, an angular velocity bias prediction unit 50, a temperature characteristic estimation unit 60, and a storage unit 70. The azimuth calculation device 1 may include a wheel speed sensor 12, an angular velocity sensor 13, a 6DoF sensor 14, a temperature sensor 15, and an external sensor 16. The azimuth calculation device 1 may have a configuration in which some of the components in FIG. 8 are omitted or changed or other components are added.

The third embodiment is different from the first and second embodiments in that the first azimuth calculation unit 20 performs processing using the external sensor 16 instead of the satellite signal receiver 11.

The external sensor 16 is a sensor that detects information around the moving body, and may be, for example, a LiDAR, a camera, and a millimeter wave radar that are used for AD, ADAS, and the like. AD is an abbreviation for autonomous driving, and ADAS is an abbreviation for advanced driver assistance system. LiDAR is an abbreviation for light detection and ranging or laser imaging detection and ranging.

The first azimuth calculation unit 20 calculates a first azimuth $\Psi_{EXT,k}$, which is the azimuth of the moving body in the global coordinate system at time k, based on the detection result of the external sensor 16. The first azimuth calculation unit 20 calculates the first azimuth $\Psi_{EXT,k}$ at a predetermined period, for example, every one second. For example, the first azimuth calculation unit 20 calculates the first azimuth $\Psi_{EXT,k}$, which is the azimuth of the moving body in the global coordinate system, by comparing the information around the moving body, which is the detection result of the external sensor 16, with map information 72 stored in the storage unit 70. The first azimuth calculation unit 20 may further calculate the position or the speed of the moving body in the global coordinate system.

As in the first embodiment or the second embodiment, the second azimuth calculation unit 30 calculates, based on the angular velocity signal output from the angular velocity sensor 13, the second azimuth $\Psi_{ins,k}$, which is the azimuth of the moving body in the global coordinate system at time k. The second azimuth calculation unit 30 calculates the second azimuth $\Psi_{ins,k}$ at time k with the angular velocity bias corrected, based on the angular velocity bias $\delta\Omega_{k-1}$ at the last time k-1 predicted by the angular velocity bias prediction unit 50.

The third azimuth calculation unit 40 calculates the third azimuth $\Psi_{est,k}$, which is the azimuth of the moving body in the global coordinate system at time k, based on the first azimuth $\Psi_{EXT,k}$ at time k calculated by the first azimuth calculation unit 20 and the second azimuth $\Psi_{ins,k}$ at time k calculated by the second azimuth calculation unit 30. The third azimuth calculation unit 40 calculates the third azimuth $\Psi_{est,k}$ at a predetermined period, for example, every one second. For example, the third azimuth calculation unit 40 may set the first azimuth $\Psi_{EXT,k}$ as the third azimuth $\Psi_{est,k}$ at the timing when the first azimuth $\Psi_{EXT,k}$ is calculated, and may set the second azimuth $\Psi_{ink,k}$ as the third azimuth $\Psi_{est,k}$ at the timing when the first azimuth $\Psi_{EXT,k}$ is not calculated. In addition, the third azimuth calculation unit 40 may calculate the third azimuth $\Psi_{est,k}$ by using a Kalman filter.

As in the first embodiment or the second embodiment, the storage unit 70 stores the temperature characteristic information 71 of the angular velocity bias $\delta\Omega_k$. The angular velocity bias $\delta\Omega_k$ may be a bias of the angular velocity of the

second azimuth $\Psi_{ins,k}$ calculated by the second azimuth calculation unit 30, as illustrated in Equation (2) above. In addition, the angular velocity bias $\delta\Omega_k$ may be a bias of the angular velocity $\omega_{z,k}$ around the yaw axis detected by the angular velocity sensor 13, as illustrated in Equation (27) above. In addition, in the third embodiment, the storage unit 70 stores the map information 72 used for calculation of the first azimuth $\Psi_{EXT,k}$ by the first azimuth calculation unit 20.

As in the first embodiment or the second embodiment, the temperature characteristic estimation unit 60 estimates the temperature characteristic of the angular velocity bias $\delta\Omega_k$ for the temperature $T_k$ detected by the temperature sensor 15, based on the second azimuth $\Psi_{ins,k}$ calculated by the second azimuth calculation unit 30 and the third azimuth $\Psi_{est,k}$ calculated by the third azimuth calculation unit 40, and updates the temperature characteristic information 71 stored in the storage unit 70, based on the estimated temperature characteristic. As described above, the temperature characteristic estimation unit 60 may estimate the first-order coefficient $c_{1,k}$ and the zero-order coefficient $c_{0,k}$ for the temperature $T_k$ by using an extended Kalman filter.

As in the first embodiment or the second embodiment, the angular velocity bias prediction unit 50 predicts the angular velocity bias $\delta\Omega_k$ based on the temperature $T_k$ detected by the temperature sensor 15 and the temperature characteristic information 71 stored in the storage unit 70. As described above, the angular velocity bias prediction unit 50 may predict the angular velocity bias $\delta\Omega_k$ by substituting the temperature $T_{k-1}$, the temperature $T_k$, and the coefficient $c_{0,k}$ to $c_{n,k}$ for the temperature $T_k$ included in the temperature characteristic information 71 into the above polynomial (4).

The other configurations and functions of the azimuth calculation device 1 according to the third embodiment are the same as those of the azimuth calculation device 1 according to the first embodiment or the second embodiment, and accordingly, description thereof will be omitted.

A flowchart illustrating an example of the procedure of an azimuth calculation method according to the third embodiment is the same as FIG. 5, and accordingly, illustration thereof will be omitted. In the third embodiment, in the first azimuth calculation step S10 in FIG. 5, the first azimuth calculation unit 20 of the azimuth calculation device 1 calculates the first azimuth $\Psi_{EXT,k}$ based on the detection result of the external sensor 16. The processing from the second azimuth calculation step S20 in FIG. 5, which is performed by the azimuth calculation device 1, is the same as that in the first embodiment or the second embodiment except that the first azimuth $\Psi_{EXT,k}$ is used instead of the first azimuth $\Psi_{gnss,k}$, and accordingly, description thereof will be omitted.

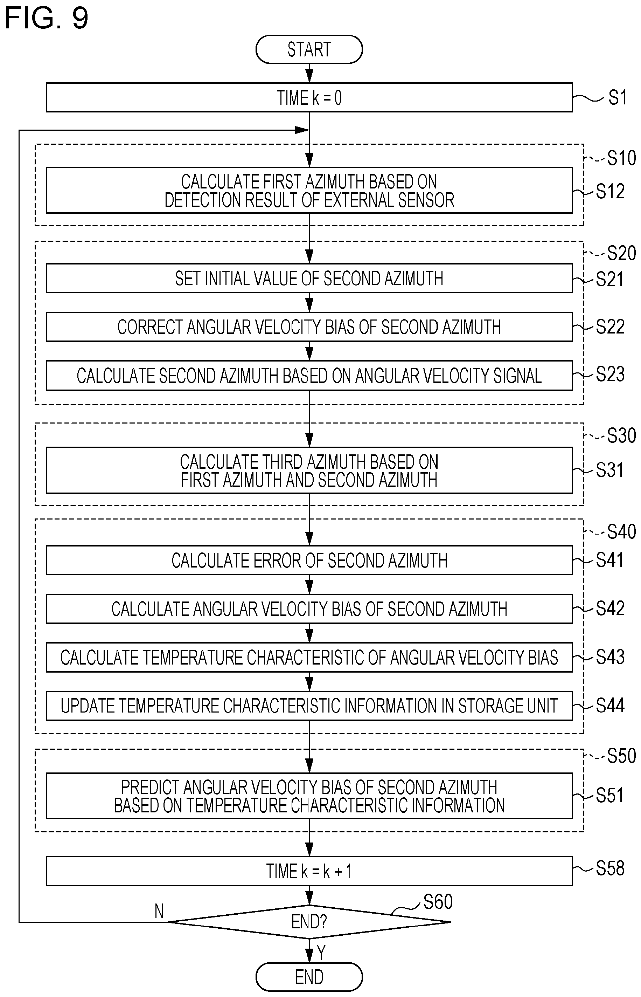

FIG. 9 is a flowchart illustrating an example of the specific procedure of the azimuth calculation method according to the third embodiment. In FIG. 9, the same steps as those in FIG. 6 are denoted by the same reference numerals. In FIG. 9, the angular velocity bias $\delta\Omega_k$ is the bias of the angular velocity of the second azimuth $\Psi_{ins,k}$.

As illustrated in FIG. 9, first, in step S1, the azimuth calculation device 1 initializes time k to 0.

Subsequently, in step S12, the first azimuth calculation unit 20 of the azimuth calculation device 1 calculates the first azimuth $\Psi_{EXT,k}$ based on the detection result of the external sensor 16. Step S12 corresponds to the first azimuth calculation step S10 in FIG. 5.

Subsequently, in steps S21, S22, and S23, the second azimuth calculation unit 30 of the azimuth calculation device 1 calculates, by performing the same processing as steps S21, S22, and S23 in FIG. 6, the second azimuth $\Psi_{ins,k}$ with the angular velocity bias corrected. Steps S21, S22, and S23 correspond to the second azimuth calculation step S20 in FIG. 5.

Subsequently, in step S31, the third azimuth calculation unit 40 of the azimuth calculation device 1 calculates the third azimuth $\Psi_{est,k}$ based on the first azimuth $\Psi_{EXT,k}$ calculated in step S12 and the second azimuth $\Psi_{ins,k}$ calculated in step S23. Step S31 corresponds to the third azimuth calculation step S30 in FIG. 5.

Subsequently, in steps S41, S42, S43, and S44, the temperature characteristic estimation unit 60 of the azimuth calculation device 1 performs processing similar to that in steps S41, S42, S43, and S44 in FIG. 6 and updates the temperature characteristic information 71 stored in the storage unit 70. Steps S41, S42, S43, and S44 correspond to the temperature characteristic estimation step S40 in FIG. 5.

Subsequently, in step S51, the angular velocity bias prediction unit 50 of the azimuth calculation device 1 performs processing similar to that in step S51 in FIG. 6 and predicts the angular velocity bias $\delta\Omega_k$ of the second azimuth $\Psi_{ins,k}$.

The azimuth calculation device 1 increases time k by 1 in step S58, and repeatedly performs steps S2 to S58 until the azimuth calculation process ends in step S60.

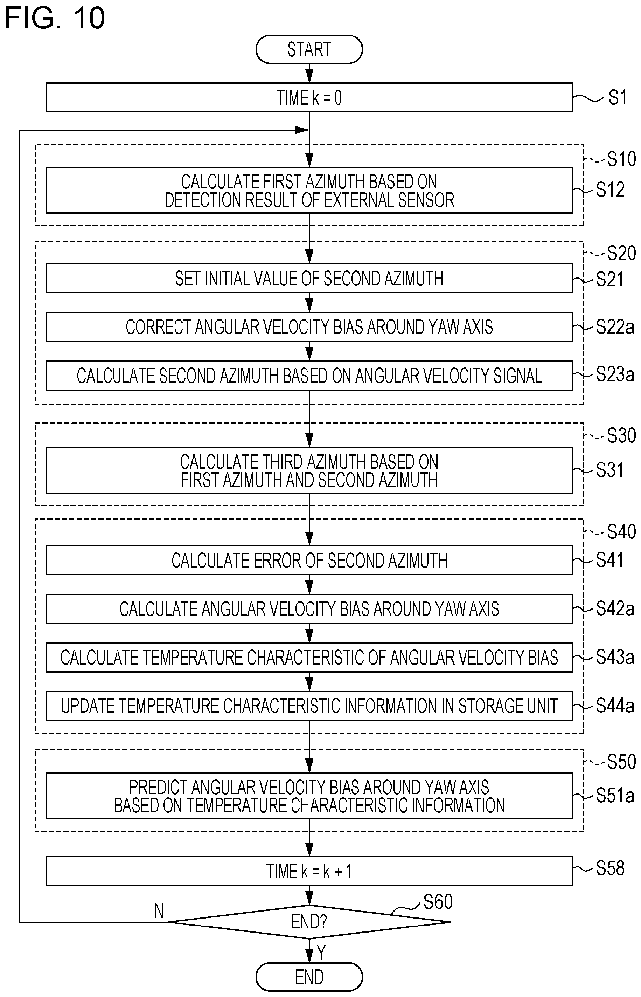

FIG. 10 is a flowchart illustrating another example of the specific procedure of the azimuth calculation method according to the third embodiment. In FIG. 10, the same steps as those in FIG. 7 are denoted by the same reference numerals. In FIG. 10, the angular velocity bias $\delta\Omega_k$ may be the bias of the angular velocity $\omega_{z,k}$ around the yaw axis detected by the angular velocity sensor 13.

As illustrated in FIG. 10, first, in step S1, the azimuth calculation device 1 initializes time k to 0.

Subsequently, in step S12, the first azimuth calculation unit 20 of the azimuth calculation device 1 calculates the first azimuth $\Psi_{EXT,k}$ based on the detection result of the external sensor 16. Step S12 corresponds to the first azimuth calculation step S10 in FIG. 5.

Subsequently, in steps S21, S22a, and S23a, the second azimuth calculation unit 30 of the azimuth calculation device 1 performs processing similar to that in steps S21, S22a, and S23a in FIG. 7 and calculates the second azimuth $\Psi_{ins,k}$ with the angular velocity bias corrected. Steps S21, S22a, and S23a correspond to the second azimuth calculation step S20 in FIG. 5.

Subsequently, in step S31, the third azimuth calculation unit 40 of the azimuth calculation device 1 calculates the third azimuth $\Psi_{est,k}$ based on the first azimuth $\Psi_{EXT,k}$ calculated in step S12 and the second azimuth $\Psi_{ins,k}$ calculated in step S23a. Step S31 corresponds to the third azimuth calculation step S30 in FIG. 5.

Subsequently, in steps S41, S42a, S43a, and S44a, the temperature characteristic estimation unit 60 of the azimuth calculation device 1 performs processing similar to that in steps S41, S42a, S43a, and S44a in FIG. 7 and updates the temperature characteristic information 71 stored in the storage unit 70. Steps S41, S42a, S43a, and S44a correspond to the temperature characteristic estimation step S40 in FIG. 5.

Subsequently, in step S51a, the angular velocity bias prediction unit 50 of the azimuth calculation device 1 performs processing similar to that in step S51a in FIG. 7 and predicts the angular velocity bias $\delta\Omega_k$ around the yaw axis.

The azimuth calculation device 1 increases time k by 1 in step S58, and repeatedly performs steps S2 to S58 until the azimuth calculation process ends in step S60.

As described above, in the third embodiment, the first azimuth calculation unit 20 can calculate the first azimuth $\Psi_{EXT,k}$ based on the detection result of the external sensor 16 regardless of whether the moving body on which the azimuth calculation device 1 is mounted is stopped or traveling, and the second azimuth calculation unit 30 can calculate the second azimuth $\Psi_{ins,k}$ based on the angular velocity signal output from the angular velocity sensor 13. Therefore, the third azimuth calculation unit 40 can seamlessly and periodically calculate the third azimuth $\Psi_{est,k}$ based on the first azimuth $\Psi_{EXT,k}$ and the second azimuth $\Psi_{ins,k}$. As a result, even when the moving body is traveling, the temperature characteristic estimation unit 60 can periodically estimate the temperature characteristic of the angular velocity bias $\delta\Omega_k$ based on the second azimuth $\Psi_{ins,k}$ and the third azimuth $\Psi_{est,k}$ and can update the temperature characteristic information 71 stored in the storage unit 70. Therefore, the second azimuth calculation unit 30 can calculate the second azimuth $\psi_{ins,k}$ with the angular velocity bias corrected, based on the angular velocity bias $\delta\Omega_{k-1}$ last time predicted by the angular velocity bias prediction unit 50 based on the temperature characteristic information 71. In addition, since the temperature characteristic estimation unit 60 estimates the temperature characteristic of the angular velocity bias $\delta\Omega_k$ for the temperature $T_k$ detected by the temperature sensor 15, it is possible to accurately estimate the temperature characteristic of the angular velocity bias $\delta\Omega_k$ for each narrow temperature range. Therefore, according to the third embodiment, the azimuth calculation device 1 can calculate the azimuth with the angular velocity bias corrected with high accuracy regardless of whether the moving body is stopped or traveling. In addition, according to the third embodiment, the same effects as those in the first embodiment or the second embodiment can be obtained.

### 4. Modification Examples

The present disclosure is not limited to the present embodiment, and various modifications can be made.

For example, although an example in which the azimuth calculation device 1 is mounted on the vehicle 5 has been described in each of the above embodiments, the azimuth calculation device 1 may be mounted on a moving body other than the vehicle Examples of the moving body include not only a vehicle but also an agricultural machine such as a tractor, a construction machine such as an excavator, an unmanned transport vehicle, a robot lawn mower, a robot vacuum cleaner, aircraft such as jet aircraft and helicopter, a ship, a rocket, a satellite, and a railroad vehicle.

In addition, for example, although the azimuth calculation device 1 includes the angular velocity sensor 13 and the 6DoF sensor 14 in each of the above embodiments, the azimuth calculation device 1 may include other sensors instead of these. For example, the azimuth calculation device 1 may include two 6DoF sensors.

**Claims**

1. An azimuth calculation device (1), comprising:

    a first azimuth calculation unit (20) that calculates a first azimuth based on a satellite signal received by a satellite signal receiver (11) or a detection result of an external sensor (16);
    a second azimuth calculation unit (30) that calculates a second azimuth based on an angular velocity signal output from an angular velocity sensor (13) detecting an angular velocity;
    a third azimuth calculation unit (40) that calculates a third azimuth based on the first azimuth and the second azimuth;
    a storage unit (70) that stores temperature characteristic information (71) of an angular velocity bias;
    a temperature characteristic estimation unit (60) that estimates, based on the second azimuth and the third azimuth, a temperature characteristic of the angular velocity bias for a temperature detected by a temperature sensor (15) and updates, based on the estimated temperature characteristic, the temperature characteristic information stored in the storage unit; and

an angular velocity bias prediction unit (50) that predicts the angular velocity bias based on the temperature detected by the temperature sensor and the temperature characteristic information stored in the storage unit, wherein the second azimuth calculation unit calculates, based on the angular velocity bias last time predicted by the angular velocity bias prediction unit, the second azimuth with the angular velocity bias corrected, wherein the angular velocity bias is approximated by a polynomial having a temperature change as a variable, wherein the temperature characteristic information includes a value of a coefficient of the polynomial for each of a plurality of temperatures, and

the temperature characteristic estimation unit (60) estimates the value of the coefficient as the temperature characteristic and calculates a variance of the estimated coefficient, and in a case in which the temperature characteristic information (71) includes the value of the coefficient for the temperature detected by the temperature sensor, the temperature characteristic estimation unit updates the value of the coefficient included in the temperature characteristic information to the estimated value of the coefficient when the variance is equal to or less than a predetermined threshold value and does not update the value of the coefficient included in the temperature characteristic information when the variance is larger than the predetermined threshold value.

2. The azimuth calculation device (1) according to claim 1, wherein the polynomial is a linear polynomial.

3. The azimuth calculation device (1) according to claim 1,
wherein the angular velocity bias is a bias of an angular velocity of the second azimuth.

4. The azimuth calculation device (1) according to claim 1,
wherein the angular velocity bias is a bias of an angular velocity around a yaw axis detected by the angular velocity sensor (13).

5. An azimuth calculation method, comprising:

a first azimuth calculation step (S10) of calculating a first azimuth based on a satellite signal received by a satellite signal receiver (11) or a detection result of an external sensor (16);
a second azimuth calculation step (S20) of calculating a second azimuth based on an angular velocity signal output from an angular velocity sensor (13) detecting an angular velocity;
a third azimuth calculation step (S30) of calculating a third azimuth based on the first azimuth and the second azimuth;
a temperature characteristic estimation step (S40) of estimating, based on the second azimuth and the third azimuth, a temperature characteristic of an angular velocity bias for a temperature detected by a temperature sensor (15) and updating, based on the estimated temperature characteristic, temperature characteristic information (71) of the angular velocity bias stored in a storage unit (70); and
an angular velocity bias prediction step (S50) of predicting the angular velocity bias based on the temperature detected by the temperature sensor and the temperature characteristic information stored in the storage unit, wherein, in the second azimuth calculation step, the second azimuth with the angular velocity bias corrected is calculated based on the angular velocity bias last time predicted in the angular velocity bias prediction step, and wherein the angular velocity bias is approximated by a polynomial having a temperature change as a variable, wherein the temperature characteristic information includes a value of a coefficient of the polynomial for each of a plurality of temperatures, and

the temperature characteristic estimation step (S40) estimates the value of the coefficient as the temperature characteristic and calculates a variance of the estimated coefficient, and in a case in which the temperature characteristic information (71) includes the value of the coefficient for the temperature detected by the temperature sensor (15), the temperature characteristic estimation step updates the value of the coefficient included in the temperature characteristic information to the estimated value of the coefficient when the variance is equal to or less than a predetermined threshold value and does not update the value of the coefficient included in the temperature characteristic information when the variance is larger than the predetermined threshold value.

**Patentansprüche**

1. Azimutberechnungsvorrichtung (1), umfassend:

eine erste Azimutberechnungseinheit (20), die einen ersten Azimut basierend auf einem Satellitsignal, das von einem Satellitensignalempfänger (11) empfangen wird, oder einem Detektionsergebnis eines externen Sensors (16) berechnet;

eine zweite Azimutberechnungseinheit (30), die einen zweiten Azimut basierend auf einem Winkelgeschwindigkeitssignal berechnet, das von einem Winkelgeschwindigkeitssensor (13) ausgegeben wird, der eine Winkelgeschwindigkeit detektiert;

eine dritte Azimutberechnungseinheit (40), die einen dritten Azimut basierend auf dem ersten Azimut und dem zweiten Azimut berechnet;

eine Speichereinheit (70), die Temperatureigenschaftsinformationen (71) einer Winkelgeschwindigkeitsverzerrung speichert;

eine Temperatureigenschaftsschätzeinheit (60), die, basierend auf dem zweiten Azimut und dem dritten Azimut, eine Temperatureigenschaft der Winkelgeschwindigkeitsverzerrung für eine Temperatur schätzt, die von einem Temperatursensor (15) detektiert wird, und, basierend auf der geschätzten Temperatureigenschaft, die Temperatureigenschaftsinformationen aktualisiert, die in der Speichereinheit gespeichert sind; und

eine Winkelgeschwindigkeitsverzerrung-Vorhersageeinheit (50), die die Winkelgeschwindigkeitsverzerrung basierend auf der vom Temperatursensor detektierten Temperatur und den in der Speichereinheit gespeicherten Temperatureigenschaftsinformationen vorhersagt,

wobei die zweite Azimutberechnungseinheit, basierend auf der Winkelgeschwindigkeitsverzerrung, die zuletzt von der Winkelgeschwindigkeitsverzerrung-Vorhersageeinheit vorhergesagt wurde, den zweiten Azimut mit der korrigierten Winkelgeschwindigkeitsverzerrung berechnet,

wobei die Winkelgeschwindigkeitsverzerrung durch ein Polynom mit einer Temperaturänderung als eine Variable genähert wird, wobei die Temperatureigenschaftsinformationen einen Wert eines Koeffizienten des Polynoms für jede einer Vielzahl von Temperaturen enthalten, und

die Temperatureigenschaftsschätzeinheit (60) den Wert des Koeffizienten als die Temperatureigenschaft schätzt und eine Varianz des geschätzten Koeffizienten berechnet und falls die Temperatureigenschaftsinformationen (71) den Wert des Koeffizienten für die Temperatur enthalten, die vom Temperatursensor detektiert wurde, die Temperatureigenschaftsschätzeinheit den Wert des Koeffizienten, der in den Temperatureigenschaftsinformationen enthalten ist, auf den geschätzten Wert des Koeffizienten aktualisiert, wenn die Varianz gleich oder kleiner als ein vorbestimmter Schwellenwert ist, und den Wert des Koeffizienten, der in den Temperatureigenschaftsinformationen enthalten ist, nicht aktualisiert, wenn die Varianz größer als der vorbestimmte Schwellenwert ist.

2. Azimutberechnungsvorrichtung (1) nach Anspruch 1, wobei das Polynom ein lineares Polynom ist.

3. Azimutberechnungsvorrichtung (1) nach Anspruch 1,
wobei die Winkelgeschwindigkeitsverzerrung eine Verzerrung einer Winkelgeschwindigkeit des zweiten Azimuts ist.

4. Azimutberechnungsvorrichtung (1) nach Anspruch 1,
wobei die Winkelgeschwindigkeitsverzerrung eine Verzerrung einer Winkelgeschwindigkeit um eine Gierachse ist, die von dem Winkelgeschwindigkeitssensor (13) detektiert wird.

5. Azimutberechnungsverfahren, umfassend:

einen ersten Azimutberechnungsschritt (S10) zum Berechnen eines ersten Azimuts basierend auf einem Satellitensignal, das von einem Satellitensignalempfänger (11) empfangen wird, oder einem Detektionsergebnis eines externen Sensors (16);

einen zweiten Azimutberechnungsschritt (S20) zum Berechnen eines zweiten Azimuts basierend auf einem Winkelgeschwindigkeitssignal, das von einem Winkelgeschwindigkeitssensor (13) ausgegeben wird, der eine Winkelgeschwindigkeit detektiert;

einen dritten Azimutberechnungsschritt (S30) zum Berechnen eines dritten Azimuts basierend auf dem ersten Azimut und dem zweiten Azimut;

einen Temperatureigenschaftsschätzschritt (S40) zum Schätzen, basierend auf dem zweiten Azimut und dem dritten Azimut, einer Temperatureigenschaft einer Winkelgeschwindigkeitsverzerrung für eine Temperatur, die von einem Temperatursensor (15) detektiert wird, und Aktualisieren, basierend auf der geschätzten Temperatureigenschaft, von Temperatureigenschaftsinformationen (71) der Winkelgeschwindigkeitsverzerrung, die in der Speichereinheit (70) gespeichert sind; und

einen Winkelgeschwindigkeitsverzerrung-Vorhersageschritt (S50) zum Vorhersagen der Winkelgeschwindigkeitsverzerrung basierend auf der vom Temperatursensor detektierten Temperatur und den in der Speichereinheit gespeicherten Temperatureigenschaftsinformationen,

wobei im zweiten Azimutberechnungsschritt der zweite Azimut mit der korrigierten Winkelgeschwindigkeitsverzerrung basierend auf der Winkelgeschwindigkeitsverzerrung, die zuletzt im Winkelgeschwindigkeitsverzerrung-Vorhersageschritt vorhergesagt wurde, berechnet wird, und

wobei die Winkelgeschwindigkeitsverzerrung durch ein Polynom mit einer Temperaturänderung als eine Variable genähert wird, wobei die Temperatureigenschaftsinformationen einen Wert eines Koeffizienten des Polynoms für jede einer Vielzahl von Temperaturen enthalten, und

der Temperatureigenschaftsschätzschritt (S40) den Wert des Koeffizienten als die Temperatureigenschaft schätzt und eine Varianz des geschätzten Koeffizienten berechnet und falls die Temperatureigenschaftsinformationen (71) den Wert des Koeffizienten für die Temperatur enthalten, die vom Temperatursensor (15) detektiert wurde, der Temperatureigenschaftsschätzschritt den Wert des Koeffizienten, der in den Temperatureigenschaftsinformationen enthalten ist, auf den geschätzten Wert des Koeffizienten aktualisiert, wenn die Varianz gleich oder kleiner als ein vorbestimmter Schwellenwert ist, und den Wert des Koeffizienten, der in den Temperatureigenschaftsinformationen enthalten ist, nicht aktualisiert, wenn die Varianz größer als der vorbestimmte Schwellenwert ist.

## Revendications

1.  Dispositif de calcul d'azimut (1), comprenant :

    une première unité de calcul d'azimut (20) calculant un premier azimut sur la base d'un signal satellite reçu par un récepteur de signal satellite (11) ou d'un résultat de détection d'un capteur externe (16) ;
    une deuxième unité de calcul d'azimut (30) calculant un deuxième azimut sur la base d'une sortie de signal de vitesse angulaire provenant d'un capteur de vitesse angulaire (13) détectant une vitesse angulaire ;
    une troisième unité de calcul d'azimut (40) calculant un troisième azimut sur la base du premier azimut et du deuxième azimut ;
    une unité de stockage (70) stockant des informations de caractéristique de température (71) d'un biais de vitesse angulaire ;
    une unité d'estimation de caractéristique de température (60) estimant, sur la base du deuxième azimut et du troisième azimut, une caractéristique de température du biais de vitesse angulaire pour une température détectée par un capteur de température (15) et mettant à jour, sur la base de la caractéristique de température estimée, les informations de caractéristique de température stockées dans l'unité de stockage ; et
    une unité de prédiction de biais de vitesse angulaire (50) prédisant le biais de vitesse angulaire sur la base de la température détectée par le capteur de température et des informations de caractéristique de température stockées dans l'unité de stockage,
    dans lequel la deuxième unité de calcul d'azimut calcule, sur la base du biais de vitesse angulaire prédit dernièrement par l'unité de prédiction de biais de vitesse angulaire, le deuxième azimut avec le biais de vitesse angulaire corrigé,
    dans lequel le biais de vitesse angulaire est approximé par un polynôme ayant un changement de température comme variable, dans lequel les informations de caractéristique de température incluent une valeur d'un coefficient du polynôme pour chacune parmi une pluralité de température, et
    l'unité d'estimation de caractéristique de température (60) estime la valeur du coefficient comme caractéristique de température et calcule une variance du coefficient estimé, et dans un cas où les informations de caractéristique de température (71) incluent la valeur du coefficient pour la température détectée par le capteur de température, l'unité d'estimation de caractéristique de température met à jour la valeur du coefficient inclus dans les informations de caractéristique de température selon la valeur estimée du coefficient lorsque la variance est égale ou inférieure à une valeur seuil prédéterminée et ne met pas à jour la valeur du coefficient inclus dans les informations de caractéristique de température lorsque la variance est supérieure à la valeur seuil prédéterminée.

2.  Dispositif de calcul d'azimut (1) selon la revendication 1,
    dans lequel le polynôme est un polynôme linéaire.

3.  Dispositif de calcul d'azimut (1) selon la revendication 1,
    dans lequel le biais de vitesse angulaire est un biais d'une vitesse angulaire du deuxième azimut.

4.  Dispositif de calcul d'azimut (1) selon la revendication 1,
    dans lequel le biais de vitesse angulaire est un biais d'une vitesse angulaire autour d'un axe de lacet détecté par le capteur de vitesse angulaire (13).

5. Procédé de calcul d'azimut, comprenant :

une première étape de calcul d'azimut (S10) consistant à calculer un premier azimut sur la base d'un signal satellite reçu pour un récepteur de signal satellite (11) ou d'un résultat de détection d'un capteur externe (16) ;
une deuxième étape de calcul d'azimut (S20) consistant à calculer un deuxième azimut sur la base d'une sortie de signal de vitesse angulaire provenant d'un capteur de vitesse angulaire (13) détectant une vitesse angulaire ;
une troisième étape de calcul d'azimut (S30) consistant à calculer un troisième azimut sur la base du premier azimut et du deuxième azimut ;
une étape d'estimation de caractéristique de température (S40) consistant à estimer, sur la base du deuxième azimut et du troisième azimut, une caractéristique de température d'un biais de vitesse angulaire pour une température détectée par un capteur de température (15) et à mettre à jour, sur la base de la caractéristique de température estimée, des informations de caractéristique de température (71) du biais de vitesse angulaire dans une unité de stockage (70) ; et
une étape de prédiction de biais de vitesse angulaire (S50) consistant à prédire le biais de vitesse angulaire sur la base de la température détectée par le capteur de température et des informations de caractéristique de température stockées dans l'unité de stockage,
dans lequel, dans la deuxième étape de calcul d'azimut calcule, le deuxième azimut avec le biais de vitesse angulaire corrigé est calculé sur la base du biais de vitesse angulaire prédit dernièrement dans l'étape de prédiction de biais de vitesse angulaire, et
dans lequel le biais de vitesse angulaire est approximé par un polynôme ayant un changement de température comme variable, dans lequel les informations de caractéristique de température incluent une valeur d'un coefficient du polynôme pour chacune parmi une pluralité de température, et
l'étape d'estimation de caractéristique de température (S40) estime la valeur du coefficient comme caractéristique de température et calcule une variance du coefficient estimé, et dans un cas où les informations de caractéristique de température (71) incluent la valeur du coefficient pour la température détectée par le capteur de température (15), l'étape d'estimation de caractéristique de température met à jour la valeur du coefficient inclus dans les informations de caractéristique de température selon la valeur estimée du coefficient lorsque la variance est égale ou inférieure à une valeur seuil prédéterminée et ne met pas à jour la valeur du coefficient inclus dans les informations de caractéristique de température lorsque la variance est supérieure à la valeur seuil prédéterminée.

**FIG. 1**

# FIG. 2

# FIG. 3

| TEMPERATURE $T_k$ | COEFFICIENTS $c_{0,k}$ to $c_{n,k}$ |
|---|---|
| $-40°C$ | $c_{0(-40°C)}$ to $c_{n(-40°C)}$ |
| $-39°C$ | $c_{0(-39°C)}$ to $c_{n(-39°C)}$ |
| $\vdots$ | $\vdots$ |
| $+24°C$ | $c_{0(+24°C)}$ to $c_{n(+24°C)}$ |
| $+25°C$ | $c_{0(+25°C)}$ to $c_{n(+25°C)}$ |
| $+26°C$ | $c_{0(+26°C)}$ to $c_{n(+26°C)}$ |
| $\vdots$ | $\vdots$ |
| $+84°C$ | $c_{0(+84°C)}$ to $c_{n(+84°C)}$ |
| $+85°C$ | $c_{0(+85°C)}$ to $c_{n(+85°C)}$ |

# FIG. 4

ANGULAR VELOCITY BIAS

ENLARGE

TEMPERATURE

ANGULAR VELOCITY BIAS

$\delta\Omega_k$

$\delta\Omega_{k-1}$

$\Delta T_{k-1}$

$\Delta T_k$

$T_{k-2}$ $T_{k-1}$ $T_k$

TEMPERATURE

EP 4 474 773 B1

# FIG. 5

START

SATELLITE NAVIGATION
CALCULATION STEP — S10

INERTIAL NAVIGATION
CALCULATION STEP — S20

COMPOSITE NAVIGATION
CALCULATION STEP — S30

TEMPERATURE CHARACTERISTIC
ESTIMATION STEP — S40

ANGULAR VELOCITY BIAS
PREDICTION STEP — S50

S60

N — END?

Y

END

# FIG. 6

```
                        START

        TIME k = 0                                    ~ S1

        SATELLITE SIGNAL RECEIVED?            N       ~ S2

                          Y

        ┌─────────────────────────────────────────┐  ~- S10
        │  CALCULATE FIRST AZIMUTH BASED ON        │  ~ S11
        │  SATELLITE SIGNAL                        │
        └─────────────────────────────────────────┘

        ┌─────────────────────────────────────────┐  ~- S20
        │  SET INITIAL VALUE OF SECOND AZIMUTH     │  ~ S21
        │                                          │
        │  CORRECT ANGULAR VELOCITY BIAS OF        │  ~ S22
        │  SECOND AZIMUTH                          │
        │                                          │
        │  CALCULATE SECOND AZIMUTH BASED ON       │  ~ S23
        │  ANGULAR VELOCITY SIGNAL                 │
        └─────────────────────────────────────────┘

        FIRST AZIMUTH CALCULATED?            N        ~ S28

                          Y

        ┌─────────────────────────────────────────┐  ~- S30
        │  CALCULATE THIRD AZIMUTH BASED ON        │  ~ S31
        │  FIRST AZIMUTH AND SECOND AZIMUTH        │
        └─────────────────────────────────────────┘

        ┌─────────────────────────────────────────┐  ~- S40
        │  CALCULATE ERROR OF SECOND AZIMUTH       │  ~ S41
        │                                          │
        │  CALCULATE ANGULAR VELOCITY BIAS OF      │  ~ S42
        │  SECOND AZIMUTH                          │
        │                                          │
        │  CALCULATE TEMPERATURE CHARACTERISTIC    │  ~ S43
        │  OF ANGULAR VELOCITY BIAS                │
        │                                          │
        │  UPDATE TEMPERATURE CHARACTERISTIC       │  ~ S44
        │  INFORMATION IN STORAGE UNIT             │
        └─────────────────────────────────────────┘

        ┌─────────────────────────────────────────┐  ~- S50
        │  PREDICT ANGULAR VELOCITY BIAS OF        │  ~ S51
        │  SECOND AZIMUTH BASED ON TEMPERATURE     │
        │  CHARACTERISTIC INFORMATION              │
        └─────────────────────────────────────────┘

        TIME k = k + 1                               ~ S58

    N        END?                                     ~ S60

                          Y

                        END
```

# EP 4 474 773 B1

## FIG. 7

```
                    ( START )
                        │
                        ▼
  ┌──────────────────────────────────────────┐
  │              TIME k = 0                    │─── S1
  └──────────────────────────────────────────┘
                        │
      ┌─────────────────▼──────────────────┐
      │                                     │        S2
      │◄──────── SATELLITE SIGNAL RECEIVED? ────────► N
      └──────────────────┬──────────────────┘
                        Y│
   ┌─ ─ ─ ─ ─ ─ ─ ─ ─ ─ ─▼─ ─ ─ ─ ─ ─ ─ ─ ─ ─ ─┐  ─ S10
   │ ┌────────────────────────────────────────┐ │
   │ │ CALCULATE FIRST AZIMUTH BASED ON        │ │─ S11
   │ │ SATELLITE SIGNAL                        │ │
   │ └────────────────────────────────────────┘ │
   └ ─ ─ ─ ─ ─ ─ ─ ─ ─ ─ ─ ─ ─ ─ ─ ─ ─ ─ ─ ─ ─ ┘
                        │
   ┌─ ─ ─ ─ ─ ─ ─ ─ ─ ─ ▼ ─ ─ ─ ─ ─ ─ ─ ─ ─ ─ ─┐  ─ S20
   │ ┌────────────────────────────────────────┐ │
   │ │ SET INITIAL VALUE OF SECOND AZIMUTH     │ │─ S21
   │ └────────────────────────────────────────┘ │
   │ ┌────────────────────────────────────────┐ │
   │ │ CORRECT ANGULAR VELOCITY BIAS AROUND    │ │─ S22a
   │ │ YAW AXIS                                │ │
   │ └────────────────────────────────────────┘ │
   │ ┌────────────────────────────────────────┐ │
   │ │ CALCULATE SECOND AZIMUTH BASED ON       │ │─ S23a
   │ │ ANGULAR VELOCITY SIGNAL                 │ │
   │ └────────────────────────────────────────┘ │
   └ ─ ─ ─ ─ ─ ─ ─ ─ ─ ─ ─ ─ ─ ─ ─ ─ ─ ─ ─ ─ ─ ┘
                        │
      ┌─────────────────▼──────────────────┐       S28
      │◄──────── FIRST AZIMUTH CALCULATED? ─────────► N
      └──────────────────┬──────────────────┘
                        Y│
   ┌─ ─ ─ ─ ─ ─ ─ ─ ─ ─ ─▼─ ─ ─ ─ ─ ─ ─ ─ ─ ─ ─┐  ─ S30
   │ ┌────────────────────────────────────────┐ │
   │ │ CALCULATE THIRD AZIMUTH BASED ON        │ │─ S31
   │ │ FIRST AZIMUTH AND SECOND AZIMUTH        │ │
   │ └────────────────────────────────────────┘ │
   └ ─ ─ ─ ─ ─ ─ ─ ─ ─ ─ ─ ─ ─ ─ ─ ─ ─ ─ ─ ─ ─ ┘
   ┌─ ─ ─ ─ ─ ─ ─ ─ ─ ─ ─▼─ ─ ─ ─ ─ ─ ─ ─ ─ ─ ─┐  ─ S40
   │ ┌────────────────────────────────────────┐ │
   │ │ CALCULATE ERROR OF SECOND AZIMUTH       │ │─ S41
   │ └────────────────────────────────────────┘ │
   │ ┌────────────────────────────────────────┐ │
   │ │ CALCULATE ANGULAR VELOCITY BIAS AROUND  │ │─ S42a
   │ │ YAW AXIS                                │ │
   │ └────────────────────────────────────────┘ │
   │ ┌────────────────────────────────────────┐ │
   │ │ CALCULATE TEMPERATURE CHARACTERISTIC OF │ │─ S43a
   │ │ ANGULAR VELOCITY BIAS                   │ │
   │ └────────────────────────────────────────┘ │
   │ ┌────────────────────────────────────────┐ │
   │ │ UPDATE TEMPERATURE CHARACTERISTIC       │ │─ S44a
   │ │ INFORMATION IN STORAGE UNIT             │ │
   │ └────────────────────────────────────────┘ │
   └ ─ ─ ─ ─ ─ ─ ─ ─ ─ ─ ─ ─ ─ ─ ─ ─ ─ ─ ─ ─ ─ ┘
   ┌─ ─ ─ ─ ─ ─ ─ ─ ─ ─ ─▼─ ─ ─ ─ ─ ─ ─ ─ ─ ─ ─┐  ─ S50
   │ ┌────────────────────────────────────────┐ │
   │ │ PREDICT ANGULAR VELOCITY BIAS AROUND    │ │─ S51a
   │ │ YAW AXIS BASED ON TEMPERATURE           │ │
   │ │ CHARACTERISTIC INFORMATION              │ │
   │ └────────────────────────────────────────┘ │
   └ ─ ─ ─ ─ ─ ─ ─ ─ ─ ─ ─ ─ ─ ─ ─ ─ ─ ─ ─ ─ ─ ┘
   ┌────────────────────────────────────────────┐
   │              TIME k = k + 1                  │─ S58
   └────────────────────────────────────────────┘
                        │
      ┌─────────────────▼──────────────────┐       S60
 N ◄──│              END?                   │
      └──────────────────┬──────────────────┘
                        Y│
                    (  END  )
```

FIG. 8

# FIG. 9

START

| | |
|---|---|
| TIME k = 0 | S1 |

**S10 / S12**
CALCULATE FIRST AZIMUTH BASED ON
DETECTION RESULT OF EXTERNAL SENSOR

**S20**
SET INITIAL VALUE OF SECOND AZIMUTH — S21

CORRECT ANGULAR VELOCITY BIAS OF SECOND AZIMUTH — S22

CALCULATE SECOND AZIMUTH BASED ON ANGULAR VELOCITY SIGNAL — S23

**S30 / S31**
CALCULATE THIRD AZIMUTH BASED ON
FIRST AZIMUTH AND SECOND AZIMUTH

**S40**
CALCULATE ERROR OF SECOND AZIMUTH — S41

CALCULATE ANGULAR VELOCITY BIAS OF SECOND AZIMUTH — S42

CALCULATE TEMPERATURE CHARACTERISTIC OF ANGULAR VELOCITY BIAS — S43

UPDATE TEMPERATURE CHARACTERISTIC INFORMATION IN STORAGE UNIT — S44

**S50 / S51**
PREDICT ANGULAR VELOCITY BIAS OF SECOND AZIMUTH
BASED ON TEMPERATURE CHARACTERISTIC INFORMATION

TIME k = k + 1 — S58

N — END? — S60

Y

END

# FIG. 10

```
                    ( START )
                        │
                        ▼
┌─────────────────────────────────────────────────────┐ ┌── S1
│                    TIME k = 0                         │─┘
└─────────────────────────────────────────────────────┘
                        │
        ┌───────────────┤
        │               ▼
        │   ┌─ ─ ─ ─ ─ ─ ─ ─ ─ ─ ─ ─ ─ ─ ─ ─ ─ ─ ─ ─ ─┐ ┌── S10
        │   │               ▼                           │─┘
        │   │   ┌───────────────────────────────────┐   │ ┌── S12
        │   │   │  CALCULATE FIRST AZIMUTH BASED ON  │   │─┘
        │   │   │  DETECTION RESULT OF EXTERNAL SENSOR│   │
        │   │   └───────────────────────────────────┘   │
        │   └─ ─ ─ ─ ─ ─ ─ ─ ─│─ ─ ─ ─ ─ ─ ─ ─ ─ ─ ─ ─┘
        │                     ▼
        │   ┌─ ─ ─ ─ ─ ─ ─ ─ ─ ─ ─ ─ ─ ─ ─ ─ ─ ─ ─ ─ ─┐ ┌── S20
        │   │   ┌───────────────────────────────────┐   │ ┌── S21
        │   │   │  SET INITIAL VALUE OF SECOND AZIMUTH│   │─┘
        │   │   └───────────────────────────────────┘   │
        │   │               ▼                           │ ┌── S22a
        │   │   ┌───────────────────────────────────┐   │─┘
        │   │   │ CORRECT ANGULAR VELOCITY BIAS AROUND YAW AXIS│
        │   │   └───────────────────────────────────┘   │
        │   │               ▼                           │ ┌── S23a
        │   │   ┌───────────────────────────────────┐   │─┘
        │   │   │CALCULATE SECOND AZIMUTH BASED ON ANGULAR VELOCITY SIGNAL│
        │   │   └───────────────────────────────────┘   │
        │   └─ ─ ─ ─ ─ ─ ─ ─ ─│─ ─ ─ ─ ─ ─ ─ ─ ─ ─ ─ ─┘
        │                     ▼
        │   ┌─ ─ ─ ─ ─ ─ ─ ─ ─ ─ ─ ─ ─ ─ ─ ─ ─ ─ ─ ─ ─┐ ┌── S30
        │   │               ▼                           │─┘
        │   │   ┌───────────────────────────────────┐   │ ┌── S31
        │   │   │  CALCULATE THIRD AZIMUTH BASED ON  │   │─┘
        │   │   │  FIRST AZIMUTH AND SECOND AZIMUTH  │   │
        │   │   └───────────────────────────────────┘   │
        │   └─ ─ ─ ─ ─ ─ ─ ─ ─│─ ─ ─ ─ ─ ─ ─ ─ ─ ─ ─ ─┘
        │                     ▼
        │   ┌─ ─ ─ ─ ─ ─ ─ ─ ─ ─ ─ ─ ─ ─ ─ ─ ─ ─ ─ ─ ─┐ ┌── S40
        │   │   ┌───────────────────────────────────┐   │ ┌── S41
        │   │   │    CALCULATE ERROR OF SECOND AZIMUTH│   │─┘
        │   │   └───────────────────────────────────┘   │
        │   │               ▼                           │ ┌── S42a
        │   │   ┌───────────────────────────────────┐   │─┘
        │   │   │CALCULATE ANGULAR VELOCITY BIAS AROUND YAW AXIS│
        │   │   └───────────────────────────────────┘   │
        │   │               ▼                           │ ┌── S43a
        │   │   ┌───────────────────────────────────┐   │─┘
        │   │   │CALCULATE TEMPERATURE CHARACTERISTIC OF ANGULAR VELOCITY BIAS│
        │   │   └───────────────────────────────────┘   │
        │   │               ▼                           │ ┌── S44a
        │   │   ┌───────────────────────────────────┐   │─┘
        │   │   │UPDATE TEMPERATURE CHARACTERISTIC INFORMATION IN STORAGE UNIT│
        │   │   └───────────────────────────────────┘   │
        │   └─ ─ ─ ─ ─ ─ ─ ─ ─│─ ─ ─ ─ ─ ─ ─ ─ ─ ─ ─ ─┘
        │                     ▼
        │   ┌─ ─ ─ ─ ─ ─ ─ ─ ─ ─ ─ ─ ─ ─ ─ ─ ─ ─ ─ ─ ─┐ ┌── S50
        │   │   ┌───────────────────────────────────┐   │ ┌── S51a
        │   │   │  PREDICT ANGULAR VELOCITY BIAS AROUND YAW AXIS│─┘
        │   │   │  BASED ON TEMPERATURE CHARACTERISTIC INFORMATION│
        │   │   └───────────────────────────────────┘   │
        │   └─ ─ ─ ─ ─ ─ ─ ─ ─│─ ─ ─ ─ ─ ─ ─ ─ ─ ─ ─ ─┘
        │                     ▼
        │   ┌───────────────────────────────────────┐     ┌── S58
        │   │             TIME k = k + 1            │─────┘
        │   └───────────────────────────────────────┘
        │                     ▼              ┌── S60
        │        N      ◇────────────◇───────┘
        └───────────────│   END?     │
                        ◇────────────◇
                           │ Y
                           ▼
                      (  END  )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009192495 A

**Non-patent literature cited in the description**

- **FENG YIBO et al.** An Adaptive Compensation Algorithm for Temperature Drift of Micro-ElectroMechanical Systems Gyroscopes Using a Strong Tracking Kalman Filter. *Sensors*, 13 May 2015, vol. 15 (5)